# EUROPEAN PATENT APPLICATION

(11) **EP 4 780 049 A1**
(43) Date of publication of application: **22.07.2026**
(21) Application number: 24864523.6
(22) Date of filing: 05.09.2024
(51) Int. Cl.: H04W 24/02

(54) **METHOD AND APPARATUS USED IN COMMUNICATION NODE FOR WIRELESS COMMUNICATION**

(30) Priority: 14.09.2023 CN 202311188824
(71) Applicant: Apogee 5G Global, LLC, Plano, TX 75024 (US)
(72) Inventor: YU, Qiaoling, Shanghai 201206 (CN); XIA, Shushu, Shanghai 201206 (CN); ZHANG, Xiaobo, Shanghai 201206 (CN)
(74) Representative: Gunzelmann, Rainer
(86) International application number: PCT/CN2024/117010
(87) International publication number: WO 2025/055803

(57) **Abstract**

Disclosed in the present application are a method and apparatus used in a communication node for wireless communication. The method comprises: a communication node receiving a first message, wherein the first message comprises first configuration information; making a measurement in a plurality of cells on the basis of the first configuration information; and sending a second message, the second message comprising first measurement information, wherein the first measurement information comprises measurement information of the plurality of cells, the measurement information of any cell among the plurality of cells comprises a cell identity of the any cell, the first measurement information depends on the measurement that is made in the plurality of cells on the basis of the first configuration information, and the plurality of cells are cells through which a first node passes. By means of the solution provided in the present application, mobility optimization and big data collection are facilitated.

## Description

### Technical Field

The present application relates to a transmission method and apparatus in a wireless communication system, and in particular to a mobility measurement reporting method and apparatus.

### Background Art

With the continuous development of wireless communication, the requirements for mobility, transmission delay, and system capacity are becoming increasingly high. Self-organising networks (SONs) and minimization of drive test (MDT) can configure terminals to measure and collect key indicators, providing reliable support for optimizing mobility performance. Existing 3GPP (the 3rd Generation Partnership Project) protocols support user equipment (UE) to store measurement-related information and report the stored measurement-related information based on base station scheduling.

As future wireless communication gradually evolves towards intelligence, artificial intelligence (AI) and machine learning have been introduced by 3GPP and studied for integration, which can be used for reducing network power consumption and optimizing mobility performance.

### Summary of the Invention

In conventional solutions, a measurement configuration of UE is relatively independent among a plurality of cells, which is not conducive to network analysis and processing of mobility data, especially not conducive to model training and/or model inference of artificial intelligence (AI) and machine learning. Therefore, how to collect as much information as possible from the plurality of cells during movement of the UE is a problem that needs to be studied.

In response to the above problem, the present application provides a solution. In the description of the above problem, an NR system is used as one example. The present application is also applicable to scenarios such as an LTE (Long-Term Evolution) system or an LTE-A (Long-Term Evolution Advanced) system to achieve technical effects similar to those of the NR system; and further, although the present application provides specific implementations for mobility in an RRC_CONNECTED state involved in the handover, the present application can also be used in scenarios such as an RRC_IDLE state or an RRC_INACTIVE state, achieving technical effects similar to mobility in an RRC connected state. Further, the use of a unified solution for different scenarios also helps to reduce hardware complexity and cost. Further, although the original intention of the present application is for a Uu air interface, the present application can also be used for a PC5 interface to achieve technical effects similar to those of the Uu air interface. Further, although the original intention of the present application is for a terminal and base station scenario, the present application is also applicable to a V2X (Vehicle-to-Everything) scenario, and communication scenarios between the terminal and a relay and between the relay and a base station to achieve technical effects similar to those in the terminal and base station scenario. Further, although the original intention of the present application is for a terminal and base station scenario, the present application is also applicable to a communication scenario of an IAB (Integrated Access and Backhaul) to achieve technical effects similar to those in the terminal and base station scenario. Further, although the original intention of the present application is for a terrestrial network (TN) scenario, the present application is also applicable to a communication scenario of a non-terrestrial network (NTN) to achieve technical effects similar to those in the TN scenario. In addition, the use of a unified solution for different scenarios also helps to reduce hardware complexity and cost.

As one embodiment, interpretations of terminologies in the present application refer to definitions in the specification protocol TS38 series of 3GPP.

As one embodiment, the interpretations of the terminologies in the present application refer to the definitions in the specification protocol TS37 series of 3GPP.

It should be noted that, in the absence of conflicts, embodiments and features in the embodiments in any node of the present application may be applied to any other node. In the absence of conflicts, the embodiments and the features in the embodiments of the present application may be arbitrarily combined with each other.

The present application discloses a method used in a first node for wireless communication, characterized by comprising:
receiving a first message, wherein the first message comprises first configuration information; making a measurement in a plurality of cells on the basis of the first configuration information; and
sending a second message, wherein the second message comprises first measurement information, the first measurement information comprises measurement information of the plurality of cells, and the measurement information of any cell in the plurality of cells comprises a cell identity of the any cell,
wherein the first measurement information depends on the measurement that is made in the plurality of cells on the basis of the first configuration information; and the plurality of cells are cells through which the first node passes.

As one embodiment, the problem to be solved by the present application comprises: how to perform measurement reporting on cell state information of a plurality of cells through which UE passes during movement.

As one embodiment, the problem to be solved by the present application comprises: how to optimize data collection of an AI module.

As one embodiment, the problem to be solved by the present application comprises: how to optimize mobility of UE.

As one embodiment, the problem to be solved by the present application comprises: how to determine reporting content of cell state information of a plurality of cells through which UE passes during movement.

As one embodiment, the problem to be solved by the present application comprises: how to determine a triggering condition for performing measurement reporting on cell state information of a plurality of cells through which UE passes during movement.

As one embodiment, characteristics of the above method comprise: the first message being a cell common message.

As one embodiment, the characteristics of the above method comprise: configuring the first configuration information for a plurality of pieces of UE.

As one embodiment, benefits of the above method comprise: being conducive to reducing signaling overhead.

As one embodiment, the benefits of the above method comprise: being conducive to base station data collection.

As one embodiment, the benefits of the above method comprise: being conducive to a base station performing AI training.

As one embodiment, the benefits of the above method comprise: being conducive to network self-configuration and self-optimization.

As one embodiment, the characteristics of the above method comprise: the first message being an SIB1 message.

As one embodiment, the characteristics of the above method comprise: the first message being a UE-specific message.

As one embodiment, the benefits of the above method comprise: being conducive to implementing a differentiated configuration of UE.

As one embodiment, the benefits of the above method comprise: being conducive to reducing reporting of same information of a plurality of pieces of UE.

According to one aspect of the present application, it is characterized in that at least one of the behavior of sending the second message or the behavior of making the measurement in the plurality of cells on the basis of the first configuration information depends on a movement speed of the first node exceeding a first threshold; and the first message comprises the first threshold.

As one embodiment, the characteristics of the above method comprise: the behavior of sending the second message depending on the movement speed of the first node exceeding the first threshold; and the first message comprises the first threshold.

As one embodiment, the characteristics of the above method comprise: the behavior of making the measurement in the plurality of cells on the basis of the first configuration information depending on the movement speed of the first node exceeding the first threshold; and the first message comprises the first threshold.

As one embodiment, the characteristics of the above method comprise: both the behavior of sending the second message and the behavior of making the measurement in the plurality of cells on the basis of the first configuration information depending on the movement speed of the first node exceeding the first threshold; and the first message comprises the first threshold.

As one embodiment, the benefits of the above method comprise: being conducive to reducing unnecessary measurement reporting.

As one embodiment, the benefits of the above method comprise: being conducive to saving resources.

According to one aspect of the present application, it is characterized in that at least one of the behavior of sending the second message or the behavior of making the measurement in the plurality of cells on the basis of the first configuration information depends on a number of passed-through cells within a first time interval exceeding a second threshold; and the first message comprises the second threshold and a time length of the first time interval.

As one embodiment, the characteristics of the above method comprise: the behavior of sending the second message depending on the number of passed-through cells within the first time interval exceeding the second threshold; and the first message comprises the second threshold and the time length of the first time interval.

As one embodiment, the characteristics of the above method comprise: the behavior of making the measurement in the plurality of cells on the basis of the first configuration information depending on the number of passed-through cells within the first time interval exceeding the second threshold; and the first message comprises the second threshold and the time length of the first time interval.

As one embodiment, the characteristics of the above method comprise: both the behavior of sending the second message and the behavior of making the measurement in the plurality of cells on the basis of the first configuration information depending on the number of passed-through cells within the first time interval exceeding the second threshold; and the first message comprises the second threshold and the time length of the first time interval.

As one embodiment, the benefits of the above method comprise: being conducive to saving power.

As one embodiment, the benefits of the above method comprise: being conducive to a base station obtaining a movement state of the first node.

As one embodiment, the benefits of the above method comprise: being conducive to a base station predicting a subsequent movement state of the first node.

According to one aspect of the present application, it is characterized in that the behavior of sending the second message depends on a priority of the measurement information of the plurality of cells.

As one embodiment, the benefits of the above method comprise: being conducive to a base station quickly obtaining needed information.

As one embodiment, the benefits of the above method comprise: being conducive to reducing signaling interaction.

As one embodiment, the benefits of the above method comprise: being conducive to reducing a delay.

According to one aspect of the present application, it is characterized in that the first measurement information indicates an order in which the first node passes through the plurality of cells.

As one embodiment, the benefits of the above method comprise: being conducive to a base station obtaining a movement path of the first node.

According to one aspect of the present application, it is characterized in that the first time interval depends on a moment at which content in second signaling is determined.

As one embodiment, the benefits of the above method comprise: being conducive to a base station obtaining the moment at which the content in the second signaling is determined.

According to one aspect of the present application, it is characterized in that the first measurement information indicates that the first node does not pass through any cell between a first cell and a second cell; and the first cell and the second cell are one cell in the plurality of cells respectively.

As one embodiment, the benefits of the above method comprise: being conducive to obtaining information of coverage holes.

As one embodiment, the benefits of the above method comprise: being conducive to obtaining cell state information of a cell.

As one embodiment, the benefits of the above method comprise: being conducive to intelligent resource management.

According to one aspect of the present application, it is characterized by comprising:
receiving a third message, wherein the third message comprises a first indication; and
in response to the second message being received, sending the third message,
wherein the third message triggers the second message; the second message comprising the first measurement information depends on the third message comprising the first indication; and the first measurement information is stored in a first UE variable.

The present application discloses a method used in a second node for wireless communication, characterized by comprising:
receiving a second message, wherein the second message comprises first measurement information, the first measurement information comprises measurement information of a plurality of cells, and the measurement information of any cell in the plurality of cells comprises a cell identity of the any cell,
wherein a sender of the second message receives a first message, and the first message comprises first configuration information; the sender of the second message makes a measurement in the plurality of cells on the basis of the first configuration information; the first measurement information depends on the measurement that is made by the sender of the second message in the plurality of cells on the basis of the first configuration information; and the plurality of cells are cells through which the sender of the second message passes.

According to one aspect of the present application, it is characterized in that at least one of the behavior of sending the second message or the behavior of making the measurement in the plurality of cells on the basis of the first configuration information depends on a movement speed of a first node exceeding a first threshold; and the first message comprises the first threshold.

According to one aspect of the present application, it is characterized in that at least one of the behavior of sending the second message or the behavior of making the measurement in the plurality of cells on the basis of the first configuration information depends on a number of passed-through cells within a first time interval exceeding a second threshold; and the first message comprises the second threshold and a time length of the first time interval.

According to one aspect of the present application, it is characterized in that the behavior of sending the second message depends on a priority of the measurement information of the plurality of cells.

According to one aspect of the present application, it is characterized in that the first measurement information indicates an order in which the first node passes through the plurality of cells.

According to one aspect of the present application, it is characterized in that the first measurement information indicates that the first node does not pass through any cell between a first cell and a second cell; and the first cell and the second cell are one cell in the plurality of cells respectively.

The present application discloses a first node for wireless communication, characterized by comprising:
a first receiver, receiving a first message, wherein the first message comprises first configuration information; and making a measurement in a plurality of cells on the basis of the first configuration information; and
a first transmitter, sending a second message, wherein the second message comprises first measurement information, the first measurement information comprises measurement information of the plurality of cells, and the measurement information of any cell in the plurality of cells comprises a cell identity of the any cell,
wherein the first measurement information depends on the measurement that is made in the plurality of cells on the basis of the first configuration information; and the plurality of cells are cells through which the first node passes.

The present application discloses a second node for wireless communication, characterized by comprising:
a second receiver, receiving a second message, wherein the second message comprises first measurement information, the first measurement information comprises measurement information of a plurality of cells, and the measurement information of any cell in the plurality of cells comprises a cell identity of the any cell,
wherein a sender of the second message receives a first message, and the first message comprises first configuration information; the sender of the second message makes a measurement in the plurality of cells on the basis of the first configuration information; the first measurement information depends on the measurement that is made by the sender of the second message in the plurality of cells on the basis of the first configuration information; and the plurality of cells are cells through which the sender of the second message passes.

As one embodiment, compared with a traditional solution, the present application has the following advantages:
- . being conducive to self-configuration and self-optimization for mobility;
- . being conducive to improving robustness of mobility;
- . being conducive to big data collection;
- . being conducive to improving a probability of successful handover;
- . being conducive to improving reliability of cell handover;
- . being conducive to improving accuracy of AI prediction; and
- . being conducive to AI model training.

### Brief Description of the Drawings

Other features, purposes, and advantages of the present application will become more apparent by reading the detailed description of the non-limiting embodiments in the following drawings with reference to them:
FIG. 1 shows a flowchart of communication of a first node according to one embodiment of the present application;
FIG. 2 shows a schematic diagram of a network architecture according to one embodiment of the present application;
FIG. 3 shows a schematic diagram of an embodiment of a wireless protocol architecture for a user plane and a control plane according to one embodiment of the present application;
FIG. 4 shows a schematic diagram of a first communication device and a second communication device according to one embodiment of the present application;
FIG. 5 shows a flowchart of wireless signal transmission according to one embodiment of the present application;

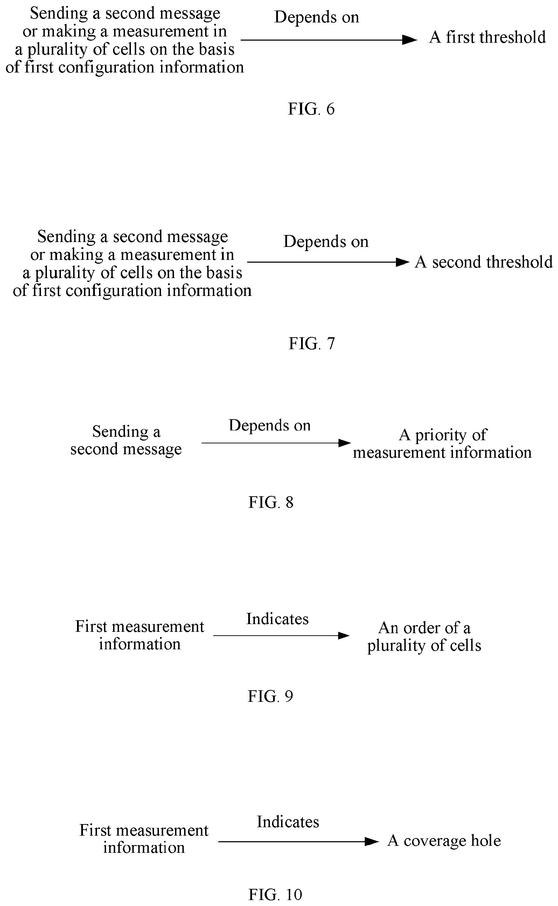

FIG. 6 shows a schematic diagram in which sending a second message or making a measurement in a plurality of cells on the basis of first configuration information depends on a first threshold according to one embodiment of the present application;
FIG. 7 shows a schematic diagram in which sending a second message or making a measurement in a plurality of cells on the basis of first configuration information depends on a second threshold according to one embodiment of the present application;
FIG. 8 shows a schematic diagram in which sending a second message depends on a priority of measurement information according to one embodiment of the present application;
FIG. 9 shows a schematic diagram in which first measurement information indicates an order of a plurality of cells according to one embodiment of the present application;
FIG. 10 shows a schematic diagram in which first measurement information indicates a coverage hole according to one embodiment of the present application;
FIG. 11 shows a structural block diagram of a processing apparatus used in a first node according to one embodiment of the present application;
FIG. 12 shows a structural block diagram of a processing apparatus used in a second node according to one embodiment of the present application;
FIG. 13 shows a schematic diagram of an artificial intelligence processing system according to one embodiment of the present application; and
FIG. 14 shows a schematic diagram of an artificial intelligence processing system according to another embodiment of one embodiment of the present application.

### Detailed Description of Embodiments

The technical solutions of the present application will be further described in detail below in conjunction with the drawings. It should be noted that in the absence of conflicts, embodiments and features in the embodiments in the present application can be arbitrarily combined with each other.

### Embodiment 1

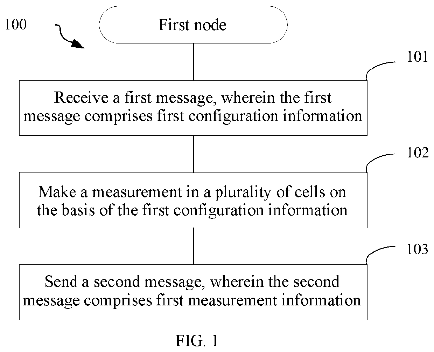

Embodiment 1 illustrates a flowchart of communication of a first node according to one embodiment of the present application, as shown in FIG. 1. In FIG. 1, each block represents one step. It particularly needs to be emphasized that an order of various blocks in the figure does not represent a temporal sequence between steps represented.

In Embodiment 1, the first node in the present application, in step 101, receives a first message, wherein the first message comprises first configuration information;in step 102, makes a measurement in a plurality of cells on the basis of the first configuration information; in step 103, sends a second message, wherein the second message comprises first measurement information; and the first measurement information comprises measurement information of the plurality of cells, and the measurement information of any cell in the plurality of cells comprises a cell identity of the any cell, wherein the first measurement information depends on the measurement that is made in the plurality of cells on the basis of the first configuration information; and the plurality of cells are cells through which the first node passes.

As one embodiment, the first message comprises at least one RRC (Radio Resource Control) message.

As one embodiment, the first message is one RRC IE (Information Element).

As one embodiment, the first message is a cell common message.

As one embodiment, the first message is one cell common RRC message.

As one embodiment, the first message is an SIB1 message.

As one embodiment, the first message is a UE-Specific message.

As one embodiment, the first message is an RRCReconfiguration message.

As one embodiment, the first message is an RRCResume message.

As one embodiment, the first message is an RRCSetup message.

As one embodiment, the first message is an RRCRelease message.

As one embodiment, the first message is an RRCReestablishment message.

As one embodiment, the first message is a LoggedMeasurementConfiguration message.

As one embodiment, the first message is transmitted through a DCCH (Dedicated Control Channel).

As one embodiment, the first message is transmitted through an SCCH (Sidelink Control Channel).

As one embodiment, the first message is transmitted through a BCCH (Broadcast Control Channel).

As one embodiment, the first message is transmitted through an SRB1 (Signaling Radio Bearer 1).

As one embodiment, the first message is transmitted through an SRB3 (Signaling Radio Bearer 3).

As one embodiment, the first message is transmitted through a PDSCH (Physical Downlink Shared Channel).

As one embodiment, the first message indicates the first configuration information.

As one embodiment, one MeasConfig in the first message comprises the first configuration information.

As one embodiment, a VarLogMeasConfig IE in the first message comprises the first configuration information.

As one embodiment, one MeasObjectId in the first message indicates the first configuration information.

As one embodiment, one MeasId in the first message indicates the first configuration information.

As one embodiment, one AreaConfiguration in the first message indicates the first configuration information.

As one embodiment, the first message comprises a first-type information block for each cell in the plurality of cells, and the first-type information block comprises the first configuration information.

As one sub-embodiment of the above embodiment, only part of fields in the first-type information block comprise the first configuration information.

As one sub-embodiment of the above embodiment, all fields in the first-type information block comprise the first configuration information.

As one sub-embodiment of the above embodiment, the first-type information block comprises a measurement configuration of at least one cell.

As one sub-embodiment of the above embodiment, the first-type information block comprises measurement configurations of the plurality of cells.

As one sub-embodiment of the above embodiment, the first-type information block is one ServingCellConfig IE.

As one sub-embodiment of the above embodiment, the first-type information block comprises one uplinkConfig field.

As one sub-embodiment of the above embodiment, the first-type information block comprises one PDCCH-ServingCellConfig IE.

As one sub-embodiment of the above embodiment, the first-type information block comprises one PDSCH-ServingCellConfig IE.

As one sub-embodiment of the above embodiment, the first-type information block comprises one CSI-MeasConfig IE.

As one embodiment, the first configuration information is configuration information related to AI.

As one embodiment, the first configuration information is configuration information related to an AI training module.

As one embodiment, the first configuration information comprises at least one AI model identifier.

As one embodiment, the first configuration information comprises only one AI model identifier.

As one embodiment, the first configuration information comprises a plurality of AI model identifiers.

As one embodiment, the AI model identifier is configured by a network.

As one embodiment, the AI model identifier is configured by an RAN.

As one embodiment, the AI model identifier is configured by a core network.

As one embodiment, the AI model identifier is generated by the first node.

As one embodiment, the AI model identifier is used for identifying one AI model.

As one embodiment, the AI model identifier is used for selecting one AI model.

As one embodiment, the AI model identifier is used for activating one AI model.

As one embodiment, the AI model identifier is used for switching one AI model.

As one embodiment, the AI model identifier is used for model pairing.

As one embodiment, the AI model identifier is one positive integer.

As one embodiment, the AI model identifier is one non-negative integer.

As one embodiment, the AI model identifier is based on LCM (lifecycle Management).

As one embodiment, the AI model identifier is an identifier on a network side.

As one embodiment, the AI model identifier is an identifier on a UE side.

As one embodiment, the AI model identifier is a two-sided identifier. As one embodiment, the AI model identifier is an identifier of a network and an identifier of UE.

As one embodiment, the AI model identifier is pre-defined.

As one embodiment, the AI model identifier is optional.

As one embodiment, the AI model identifier is globally unique.

As one embodiment, the AI model identifier is indicated by a PLMN ID.

As one embodiment, the AI model identifier is indicated by a combination of a plurality of basic fields.

As one embodiment, the first configuration information comprises at least one AI model list; and an AI model to which any cell in the plurality of cells belongs is identified by one AI model in the at least one AI model identifier list.

As one embodiment, the first configuration information comprises at least one PLMN identity; and a PLMN to which any cell in the plurality of cells belongs is identified by one PLMN in the at least one PLMN identity.

As one embodiment, the first configuration information comprises at least one TAC (Tracking Area Code); and a TA to which any cell in the plurality of cells belongs is identified by one TAC in the at least one TAC.

As one embodiment, the first configuration information comprises at least one cell identity list; and a cell identity to which any cell in the plurality of cells belongs is identified by one cell identity in the at least one cell identity list.

As one embodiment, the first configuration information makes a relevant measurement in any cell in the plurality of cells identified by one AI model in the at least one AI model list.

As one embodiment, the first configuration information makes the relevant measurement in any cell in the plurality of cells identified by one PLMN identity in the at least one PLMN identity.

As one embodiment, the first configuration information makes the relevant measurement in any cell in the plurality of cells identified by one TAC in the at least one TAC.

As one embodiment, the first configuration information makes the relevant measurement in any cell in the plurality of cells identified by one cell identity in the at least one cell identity list.

As one embodiment, the first configuration information is configuration information related to data collection.

As one embodiment, the first configuration information comprises configuration information of a physical layer of at least one cell.

As one embodiment, the first configuration information comprises configuration information of physical layers of the plurality of cells.

As one embodiment, the first configuration information comprises configuration information of a protocol layer above the physical layer of at least one cell.

As one embodiment, the first configuration information comprises configuration information of protocol layers above physical layers of the plurality of cells.

As one embodiment, the first configuration information comprises at least part of fields in one CellGroupConfig IE.

As one embodiment, the first configuration information comprises at least part of fields in one ServingCellConfig IE.

As one embodiment, the first configuration information comprises at least part of fields in a ServingCellConfigCommon IE.

As one embodiment, the first configuration information comprises a PDCCH-ServingCellConfigCommon IE.

As one embodiment, the first configuration information comprises a PDSCH-ServingCellConfigCommon IE.

As one embodiment, the first configuration information comprises one servingCellMO field.

As one embodiment, the first configuration information comprises at least part of fields in one RRCReconfiguration-IE.

As one embodiment, the first configuration information comprises at least one MeasConfig IE.

As one embodiment, the first configuration information comprises at least one VarLogMeasConfig IE.

As one embodiment, the first configuration information comprises at least one reportConfig.

As one embodiment, the first configuration information comprises one Per-AI measurement configuration.

As one embodiment, the first configuration information is one MeasConfig IE.

As one embodiment, the first configuration information is one VarLogMeasConfig IE.

As one embodiment, the first configuration information is one Per-AI measurement configuration.

As one embodiment, the behavior of making the measurement comprises: monitoring a downlink reference signal.

As one embodiment, the downlink reference signal is an SSB.

As one embodiment, the downlink reference signal is a CSI (Channel State Information)-RS.

As one embodiment, the downlink reference signal is a CRS (Cell-Specific Reference Signal).

As one embodiment, the downlink reference signal is a PRS (Positioning Reference Signal).

As one embodiment, the behavior of making the measurement comprises: obtaining a measurement result of the downlink reference signal.

As one embodiment, the measurement result of the downlink reference signal is RSRP (Reference Signal Received Power).

As one embodiment, the measurement result of the downlink reference signal is RSRQ (Reference Signal Received Quality).

As one embodiment, the measurement result of the downlink reference signal is an RSSI (Received Signal Strength Indicator).

As one embodiment, the measurement result of the downlink reference signal is an SINR (Signal to Interference plus Noise Ratio).

As one embodiment, the behavior of making the measurement comprises: storing the measurement result of the downlink reference signal.

As one embodiment, the behavior of making the measurement comprises: determining a movement speed of the first node.

As one embodiment, the behavior of making the measurement comprises: determining a movement direction of the first node.

As one embodiment, the behavior of making the measurement comprises: determining a movement path of the first node.

As one embodiment, the behavior of making the measurement comprises: determining a position of the first node.

As one embodiment, the behavior of making the measurement in the plurality of cells on the basis of the first configuration information means: when the first node passes through any cell in the plurality of cells, making the measurement on the basis of the first configuration information.

As one embodiment, when the first node passes through any cell in the plurality of cells, the any cell is in an RRC_CONNECTED state.

As one embodiment, when the first node passes through any cell in the plurality of cells, the any cell is in an RRC_IDLE state.

As one embodiment, when the first node passes through any cell in the plurality of cells, the any cell is in an RRC_INACTIVE state.

As one embodiment, when the first node passes through any cell in the plurality of cells, the any cell is in any state among the RRC_CONNECTED state, the RRC_INACTIVE state, and the RRC_IDLE state.

As one embodiment, a passed-through cell means: a serving cell.

As one embodiment, the passed-through cell means: a target cell.

As one embodiment, the passed-through cell means: a candidate cell.

As one embodiment, the passed-through cell means: a PCell.

As one embodiment, the passed-through cell means: an SCell.

As one embodiment, the passed-through cell means: an SpCell.

As one embodiment, the passed-through cell means: a handover cell.

As one embodiment, the passed-through cell means: a switched cell.

As one embodiment, the passed-through cell means: a resident cell.

As one embodiment, the passed-through cell means: a handover cell or a resident cell.

As one embodiment, the passed-through cell means: a cell in which the RSRQ is greater than one threshold.

As one embodiment, the passed-through cell means: a cell in which the RSRP is greater than one threshold.

As one embodiment, the passed-through cell means: a cell in which the SINR is greater than one threshold.

As one embodiment, the passed-through cell means: a cell in which any value among the RSRP, the RSRQ, and the SINR is greater than a threshold.

As one embodiment, the plurality of cells belong to the same network slice.

As one embodiment, the plurality of cells belong to the same PLMN.

As one embodiment, the plurality of cells belong to the same TAC.

As one embodiment, the plurality of cells belong to a plurality of TACs.

As one embodiment, the plurality of cells are associated with the same AI model.

As one embodiment, the plurality of cells are associated with different AI models.

As one embodiment, the second message is one piece of UE-specific signaling.

As one embodiment, the second message comprises at least one RRC message.

As one embodiment, the second message is one RRC message.

As one embodiment, the second message is one uplink message.

As one embodiment, the second message is one sidelink message.

As one embodiment, the second message is one piece of signaling of a MAC sublayer.

As one embodiment, the second message is one piece of signaling below the MAC sublayer.

As one embodiment, the second message is one MAC CE.

As one embodiment, the second message is transmitted through a DCCH.

As one embodiment, the second message is transmitted through an SCCH.

As one embodiment, the second message is transmitted through an SRB1.

As one embodiment, the second message is transmitted through an SRB3.

As one embodiment, the first measurement information is used for data collection.

As one embodiment, the first measurement information assists a mobility configuration of a network.

As one embodiment, the first measurement information triggers the mobility configuration of the network.

As one embodiment, the first measurement information is used for AI training of a network.

As one embodiment, the first measurement information is used for AI inference of a network.

As one embodiment, the first measurement information is used for AI management of a network.

As one embodiment, the first measurement information comprises the movement speed of the first node.

As one embodiment, the first measurement information comprises the movement direction of the first node.

As one embodiment, the first measurement information comprises the movement path of the first node.

As one embodiment, the measurement information is a measurement for one cell.

As one embodiment, the measurement information is a measurement for one beam.

As one embodiment, the measurement information of any cell in the plurality of cells comprises a time length of passing through the any cell.

As one embodiment, the measurement information of any cell in the plurality of cells comprises whether a measurement result in the any cell is better than one threshold.

As one embodiment, the measurement information of any cell in the plurality of cells comprises a time length during which the measurement result in the any cell is better than one threshold.

As one embodiment, the measurement information of any cell in the plurality of cells comprises measurement results of neighboring cells of the any cell.

As one embodiment, the measurement information of any cell in the plurality of cells comprises a result of whether the first node accesses the any cell.

As one embodiment, the cell identity of the any cell comprises an NCGI (NR Cell Global Identifier).

As one embodiment, the cell identity of the any cell comprises a CGI (Cell Global Identifier).

As one embodiment, the cell identity of the any cell comprises a PLMN (Public Land Mobile Network).

As one embodiment, the cell identity of the any cell comprises one of the NCGI, the CGI, and the PLMN.

As one embodiment, the cell identity of the any cell comprises the PLMN and the CGI.

As one embodiment, the first measurement information comprises the AI model identifier.

As one embodiment, the first measurement information is associated with the AI model identifier.

As one embodiment, the cell identity of the any cell is one bit string.

As one embodiment, the cell identity of the any cell uniquely indicates the any cell within one tracking area.

As one embodiment, the cell identity of the any cell uniquely indicates the any cell within a plurality of tracking areas.

As one embodiment, the cell identity of the any cell uniquely indicates the any cell within one PLMN.

As one embodiment, the cell identity of the any cell uniquely indicates the any cell within a plurality of PLMNs.

As one embodiment, the cell identity of the any cell comprises a cell global identity of the any cell.

As one embodiment, the cell identity of the any cell is the cell global identity and the tracking area code of the any cell.

As one embodiment, the cell identity of the any cell comprises a PCI (Physical Cell Identity) of the any cell.

As one embodiment, the identity of the any cell is a PCI and a carrier frequency of the any cell.

As one embodiment, if the cell global identity and the tracking area code of the any cell are available, the cell identity of the any cell is the cell global identity and the tracking area code of the any cell; otherwise, the cell identity of the any cell is the PCI of the any cell.

As one embodiment, the first measurement information comprises a best measurement result measured in any cell in the plurality of cells.

As one embodiment, the first measurement information comprises a worst measurement result measured in any cell in the plurality of cells.

As one embodiment, the first measurement information comprises a measurement result of the measurement that is made in the plurality of cells on the basis of the first configuration information.

As one embodiment, the first measurement information comprises an index of a measurement result of the measurement that is made in the plurality of cells on the basis of the first configuration information.

As one embodiment, when the first node has a first capability, the first measurement information depends on the measurement that is made in the plurality of cells on the basis of the first configuration information.

As one embodiment, only when the first node has the first capability, the first measurement information depends on the measurement that is made in the plurality of cells on the basis of the first configuration information.

The above method avoids an impact of UE not having the first capability.

As one embodiment, the first capability supports at least AI/ML.

As one embodiment, the first capability supports at least model inference.

As one embodiment, the first capability supports at least model training.

The above method is conducive to AI/ML-based mobility.

The above method is conducive to model inference for AI/ML-based mobility.

The above method is conducive to model training for AI/ML-based mobility.

### Embodiment 2

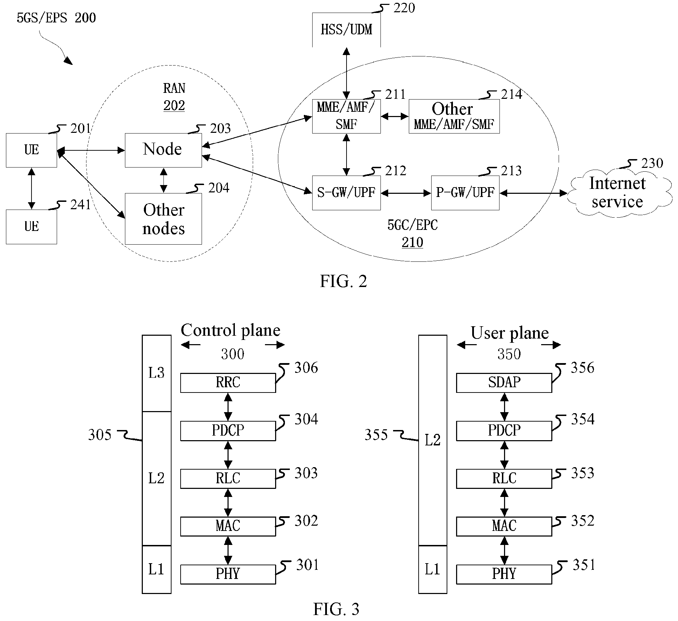

Embodiment 2 illustrates a schematic diagram of a network architecture according to one embodiment of the present application, as shown in FIG. 2. FIG. 2 illustrates a network architecture 200 of a 5G NR (New Radio)/LTE (Long-Term Evolution)/LTE-A (Long-Term Evolution Advanced) system. The 5G NR/LTE/LTE-A network architecture 200 may be referred to as a 5GS (5G System)/EPS (Evolved Packet System) 200 or some other suitable terminologies. The 5GS/EPS 200 comprises at least one of UE (User Equipment) 201, an RAN (Radio Access Network) 202, a 5GC (5G Core Network)/EPC (Evolved Packet Core) 210, an HSS (Home Subscriber Server)/UDM (Unified Data Management) 220, and an Internet Service 230. The 5GS/EPS may be interconnected with other access networks, but for simplicity, these entities/interfaces are not shown. As shown in the figure, the 5GS/EPS provides packet switching services, however, those skilled in the art will readily appreciate that the various concepts presented throughout the present application may be extended to networks that provide circuit switching services or other cellular networks. The RAN comprises a node 203 and other nodes 204. The node 203 provides user and control plane protocol termination towards the UE201. The node 203 may be connected to other nodes 204 via an Xn interface (e.g., backhaul)/X2 interface. The node 203 may also be referred to as a base station, a base transceiver station, a radio base station, a radio transceiving device, a transceiving device function, a basic service set (BSS), an extended service set (ESS), a TRP (transmitter receiver point), or some other suitable terminologies. The node 203 provides an access point to the 5GC/EPC210 for the UE201. Examples of the UE201 comprise a cellular phone, a smart phone, a session initiation protocol (SIP) phone, a laptop, a personal digital assistant (PDA), a satellite radio, non-terrestrial base station communication, satellite mobile communication, a global positioning system, a multimedia apparatus, a video apparatus, a digital audio player (e.g., an MP3 player), a camera, a game console, a drone, an aircraft, a narrowband Internet of Things device, a machine type communication device, a land vehicle, an automobile, a wearable device, or any other similarly functional apparatus. Those skilled in the art may also refer to the UE201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terminologies. The node 203 is connected to the 5GC/EPC210 through an S1/NG interface. The 5GC/EPC210 comprises an MME (Mobility Management Entity)/AMF (Authentication Management Field)/SMF (Session Management Function) 211, other MME/AMF/SMF214, an S-GW (Service Gateway)/UPF (User Plane Function) 212, and a P-GW (Packet Data Network Gateway)/UPF213. The MME/AMF/SMF211 is a control node that processes signaling between the UE201 and the 5GC/EPC210. Generally, the MME/AMF/SMF211 provides bearer and connection management. All user IP (Internet Protocol) packets are transmitted through the S-GW/UPF212, and the S-GW/UPF212 itself is connected to the P-GW/UPF213. The P-GW provides UE IP address allocation and other functions. The P-GW/UPF213 is connected to the Internet service 230. The Internet service 230 comprises operator-corresponding Internet protocol services, which may specifically comprise the Internet, an intranet, an IMS (IP Multimedia Subsystem), and a packet switching streaming service.

As one embodiment, the UE201 corresponds to a first node in the present application.

As one embodiment, the UE201 is one piece of user equipment (UE).

As one embodiment, the UE201 is one BaseStation device (BS).

As one embodiment, the UE201 is one relay device.

As one embodiment, the UE201 is one gateway device.

As one embodiment, the node 203 corresponds to a second node in the present application.

As one embodiment, the node 203 is one base station device.

As one embodiment, the node 203 is one piece of user equipment.

As one embodiment, the node 203 is one relay device.

As one embodiment, the node 203 is one gateway device.

Typically, the UE201 is one piece of user equipment, and the node 203 is one base station device.

Typically, the UE201 is one piece of user equipment, and the node 203 is one piece of user equipment.

Typically, the UE201 is one base station device, and the node 203 is one base station device.

As one embodiment, the user equipment supports transmission in a non-terrestrial network (NTN).

As one embodiment, the user equipment supports transmission in a terrestrial network.

As one embodiment, the user equipment supports dual connection (DC) transmission.

As one embodiment, the user equipment comprises an aircraft.

As one embodiment, the user equipment comprises a vehicle-mounted terminal.

As one embodiment, the user equipment comprises a vessel.

As one embodiment, the user equipment comprises an Internet of Things terminal.

As one embodiment, the user equipment comprises a terminal of an industrial Internet of Things.

As one embodiment, the user equipment comprises a device that supports low-delay and high-reliability transmission.

As one embodiment, the user equipment comprises a test device.

As one embodiment, the user equipment comprises a signaling tester.

As one embodiment, the user equipment comprises an IAB (Integrated Access and Backhaul)-MT.

As one embodiment, the user equipment supports generating reports using AI (Artificial Intelligence) or Machine Learning.

As one embodiment, the user equipment supports generating a trained model using training data or generating partial parameters in a trained model using trained data.

As one embodiment, the user equipment supports determining a second message through training.

As one embodiment, the user equipment supports determining a cell identity through training.

As one embodiment, the user equipment is a terminal supporting Massive-MIMO.

As one embodiment, the base station device supports transmission in a non-terrestrial network.

As one embodiment, the base station device supports transmission in a terrestrial network.

As one embodiment, the base station device comprises a base transceiver station (BTS).

As one embodiment, the base station device comprises a NodeB (NB).

As one embodiment, the base station device comprises a gNB.

As one embodiment, the base station device comprises an eNB.

As one embodiment, the base station device comprises an ng-eNB.

As one embodiment, the base station device comprises an en-gNB.

As one embodiment, the base station device comprises a CU (Centralized Unit).

As one embodiment, the base station device comprises a DU (Distributed Unit).

As one embodiment, the base station device comprises a TRP (Transmitter Receiver Point).

As one embodiment, the base station device comprises a Macro Cellular base station.

As one embodiment, the base station device comprises a Micro Cell base station.

As one embodiment, the base station device comprises a Pico Cell base station.

As one embodiment, the base station device comprises a Femtocell.

As one embodiment, the base station device comprises a flight platform device.

As one embodiment, the base station device comprises a satellite device.

As one embodiment, the base station device comprises a test device.

As one embodiment, the base station device comprises a signaling tester.

As one embodiment, the base station device comprises a gateway device.

As one embodiment, the base station device comprises an IAB-node.

As one embodiment, the base station device comprises an IAB-donor.

As one embodiment, the base station device comprises an IAB-donor-CU.

As one embodiment, the base station device comprises an IAB-donor-DU.

As one embodiment, the base station device comprises an IAB-DU.

As one embodiment, the base station device comprises an IAB-MT.

As one embodiment, the base station device supports Massive-MIMO-based transmission.

As one embodiment, the base station device supports decompressing CSI using AI or deep learning.

As one embodiment, the base station device supports mobility management using AI or deep learning.

### Embodiment 3

Embodiment 3 shows a schematic diagram of an embodiment of one wireless protocol architecture for a user plane and a control plane according to the present application, as shown in FIG. 3. FIG. 3 is a schematic diagram illustrating an embodiment of a radio protocol architecture for a user plane 350 and a control plane 300. FIG. 3 shows the radio protocol architecture for the control plane 300 using three layers: a Layer 1, a Layer 2, and a Layer 3. The Layer 1 (L1 layer) is the lowest layer and implements various PHY (physical layer) signal processing functions. The L1 layer will be referred to as a PHY301 herein. A Layer 2 (L2 layer) 305 is above the PHY301 and comprises a MAC (Medium Access Control) sublayer 302, an RLC (Radio Link Control) sublayer 303, and a PDCP (Packet Data Convergence Protocol) sublayer 304. The PDCP sublayer 304 provides multiplexing between different radio bearers and logical channels. The PDCP sublayer 304 also provides security by encrypting data packets, and provides handover support. The RLC sublayer 303 provides segmentation and reassembly of upper-layer data packets, retransmission of lost data packets, and reordering of data packets to compensate for out-of-order reception due to an HARQ (Hybrid Automatic Repeat Request). The MAC sublayer 302 provides multiplexing between logical and transport channels. The MAC sublayer 302 is also responsible for allocating various radio resources (e.g., resource blocks) in one cell. The MAC sublayer 302 is also responsible for HARQ operations. An RRC (Radio Resource Control) sublayer 306 in the Layer 3 (L3 layer) in the control plane 300 is responsible for obtaining radio resources (i.e., radio bearers) and configuring lower layers by using RRC signaling. The radio protocol architecture for the user plane 350 comprises the Layer 1 (L1 layer) and the Layer 2 (L2 layer). The radio protocol architecture in the user plane 350 is substantially the same as the corresponding layers and sublayers in the control plane 300 for a physical layer 351, a PDCP sublayer 354 in an L2 layer 355, an RLC sublayer 353 in the L2 layer 355, and a MAC sublayer 352 in the L2 layer 355, but the PDCP sublayer 354 also provides header compression for upper-layer data packets to reduce radio transmission overhead. The L2 layer 355 in the user plane 350 also comprises an SDAP (Service Data Adaptation Protocol) sublayer 356, and the SDAP sublayer 356 is responsible for mapping between a QoS stream and a data radio bearer (DRB) to support the diversity of services.

As one embodiment, the wireless protocol architecture in FIG. 3 is applicable to a first node in the present application.

As one embodiment, the wireless protocol architecture in FIG. 3 is applicable to a second node in the present application.

As one embodiment, a first message in the present application is generated in an RRC306.

As one embodiment, the first message in the present application is generated in the a MAC302 or a MAC352.

As one embodiment, a second message in the present application is generated in the RRC306.

As one embodiment, the second message in the present application is generated in the MAC302 or the MAC352.

As one embodiment, first configuration information in the present application is configured in the RRC306.

As one embodiment, the first configuration information in the present application is configured in the MAC302 or the MAC352.

As one embodiment, first measurement information in the present application is generated in the RRC306.

As one embodiment, the first measurement information in the present application is generated in the MAC302 or the MAC352.

As one embodiment, the first measurement information in the present application is generated in the PHY301 or a PHY351.

As one embodiment, a third message in the present application is generated in the RRC306.

As one embodiment, the third message in the present application is generated in the MAC302 or the MAC352.

As one embodiment, a first indication in the present application is generated in the RRC306.

As one embodiment, the first indication in the present application is generated in the MAC302 or the MAC352.

As one embodiment, the first indication in the present application is generated in the PHY301 or the PHY351.

### Embodiment 4

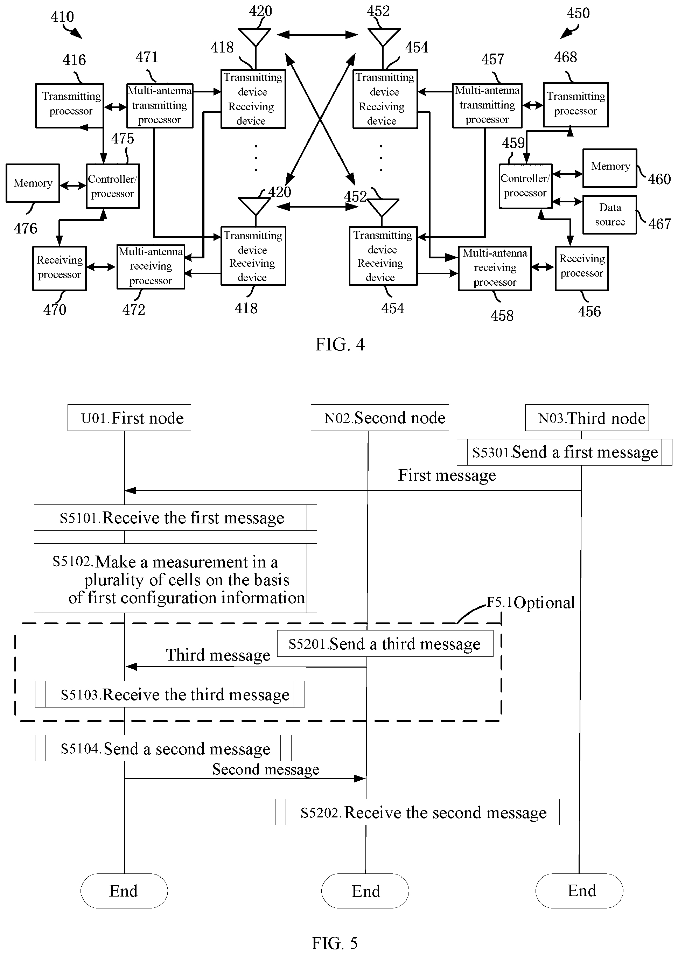

Embodiment 4 shows a schematic diagram of a first communication device and a second communication device according to the present application, as shown in FIG. 4. FIG. 4 is a block diagram of a first communication device 450 and a second communication device 410 communicating with each other in an access network.

The first communication device 450 comprises a controller/processor 459, a memory 460, a data source 467, a transmitting processor 468, a receiving processor 456, a multi-antenna transmitting processor 457, a multi-antenna receiving processor 458, a transmitting device/receiving device 454, and an antenna 452.

The second communication device 410 comprises a controller/processor 475, a memory 476, a receiving processor 470, a transmitting processor 416, a multi-antenna receiving processor 472, a multi-antenna transmitting processor 471, a transmitting device/receiving device 418, and an antenna 420.

In transmission from the second communication device 410 to the first communication device 450, at the second communication device 410, upper-layer data packets from a core network are provided to the controller/processor 475. The controller/processor 475 implements the functionality of an L2 layer. In the transmission from the second communication device 410 to the first communication device 450, the controller/processor 475 provides header compression, encryption, packet segmentation and reordering, multiplexing between logical and transport channels, and radio resource allocation to the first communication device 450 based on various priority metrics. The controller/processor 475 is also responsible for retransmission of lost packets and signaling to the first communication device 450. The transmitting processor 416 and the multi-antenna transmitting processor 471 implement various signal processing functions for an L1 layer (i.e., a physical layer). The transmitting processor 416 implements coding and interleaving to facilitate forward error correction (FEC) at the second communication device 410 and mapping of signal constellations based on various modulation solutions (e.g., binary phase shift keying (BPSK), quadrature phase shift keying (QPSK), M-phase shift keying (M-PSK), and M-quadrature amplitude modulation (M-QAM)). The multi-antenna transmitting processor 471 performs digital spatial precoding, comprising codebook-based precoding and non-codebook-based precoding, and beamforming processing on the coded and modulated symbols to generate one or more spatial streams. The transmitting processor 416 then maps each spatial stream to subcarriers, multiplexes with a reference signal (e.g., pilot) in the time domain and/or frequency domain, and then uses an inverse fast Fourier transform (IFFT) to produce a physical channel that carries a time-domain multi-carrier symbol stream. The multi-antenna transmitting processor 471 then performs sending analog precoding/beamforming operations on the time-domain multi-carrier symbol stream. Each transmitting device 418 converts a baseband multi-carrier symbol stream provided by the multi-antenna transmitting processor 471 into a radio frequency stream, which is then provided to different antennas 420.

In the transmission from the second communication device 410 to the first communication device 450, at the first communication device 450, each receiving device 454 receives a signal through its corresponding antenna 452. Each receiving device 454 recovers information modulated onto a radio frequency carrier, converts a radio frequency stream into a baseband multi-carrier symbol stream, and provides it to the receiving processor 456. The receiving processor 456 and the multi-antenna receiving processor 458 implement various signal processing functions of the L1 layer. The multi-antenna receiving processor 458 performs receiving analog precoding/beamforming operations on the baseband multi-carrier symbol stream from the receiving device 454. The receiving processor 456 converts the baseband multi-carrier symbol stream subjected to the receiving analog precoding/beamforming operations from the time domain to the frequency domain using a fast Fourier transform (FFT). In the frequency domain, a physical layer data signal and the reference signal are demultiplexed by the receiving processor 456, wherein the reference signal is used for channel estimation, and the data signal is subjected to multi-antenna detection in the multi-antenna receiving processor 458 to recover any spatial streams destined for the first communication device 450. Symbols on each spatial stream are demodulated and recovered in the receiving processor 456, and a soft decision is generated. The receiving processor 456 then decodes and deinterleaves the soft decision to recover upper-layer data and control signals transmitted by the second communication device 410 on the physical channel. The upper-layer data and the control signals are then provided to the controller/processor 459. The controller/processor 459 implements functions of the L2 layer. The controller/processor 459 may be associated with the memory 460 storing program codes and data. The memory 460 may be referred to as a computer-readable medium. In the transmission from the second communication device 410 to the second communication device 450, the controller/processor 459 provides demultiplexing between transport and logical channels, packet reassembly, decryption, header decompression, and control signal processing to recover upper-layer data packets from the core network. The upper-layer data packets are then provided to all protocol layers above the L2 layer. Various control signals may also be provided to an L3 for L3 processing.

In transmission from the first communication device 450 to the second communication device 410, at the first communication device 450, the upper-layer data packets are provided to the controller/processor 459 using the data source 467. The data source 467 represents all protocol layers above the L2 layer. Similar to a sending function at the second communication device 410 as described in the transmission from the second communication device 410 to the first communication device 450, the controller/processor 459 implements header compression, encryption, packet segmentation and reordering, and multiplexing between logical and transport channels based on radio resource allocation, and implements the functions of the L2 layer for the user plane and the control plane. The controller/processor 459 is also responsible for retransmission of lost packets and signaling to the second communication device 410. The transmitting processor 468 executes modulation mapping and channel coding processing, the multi-antenna transmitting processor 457 performs digital multi-antenna spatial precoding, comprising codebook-based precoding and non-codebook-based precoding, and beamforming processing, and then the transmitting processor 468 modulates the generated spatial stream into a multi-carrier/single-carrier symbol stream, which is then provided to different antennas 452 via the transmitting device 454 after the analog precoding/beamforming operations in the multi-antenna transmitting processor 457. Each transmitting device 454 first converts the baseband symbol stream provided by the multi-antenna transmitting processor 457 into the radio frequency symbol stream, which is then provided to the antenna 452.

In the transmission from the first communication device 450 to the second communication device 410, the function at the second communication device 410 is similar to the receiving function at the first communication device 450 described in the transmission from the second communication device 410 to the first communication device 450. Each receiving device 418 receives a radio frequency signal through its corresponding antenna 420, converts the received radio frequency signal into a baseband signal, and provides the baseband signal to the multi-antenna receiving processor 472 and the receiving processor 470. The receiving processor 470 and the multi-antenna receiving processor 472 jointly implement the functions of the L1 layer. The controller/processor 475 implements the functions of the L2 layer. The controller/processor 475 may be associated with the memory 476 that stores program code and data. The memory 476 may be referred to as a computer-readable medium. In the transmission from the first communication device 450 to the second communication device 410, the controller/processor 475 provides demultiplexing between transport and logical channels, packet reassembly, decryption, header decompression, and control signal processing to recover upper-layer data packets from UE450. The upper-layer data packets from the controller/processor 475 may be provided to the core network.

As one embodiment, the first communication device 450 comprises: at least one processor and at least one memory, wherein the at least one memory comprises computer program codes; the at least one memory and the computer program codes are configured to be used together with the at least one processor; and the first communication device 450 at least: receives a first message, wherein the first message comprises first configuration information; makes a measurement in a plurality of cells on the basis of the first configuration information; and sends a second message, wherein the second message comprises first measurement information, the first measurement information comprises measurement information of the plurality of cells, and the measurement information of any cell in the plurality of cells comprises a cell identity of the any cell, wherein the first measurement information depends on the measurement that is made in the plurality of cells on the basis of the first configuration information; and the plurality of cells are cells through which a first node passes.

As one embodiment, the first communication device 450 comprises: a memory storing a computer-readable instruction program, wherein the computer-readable instruction program generates an action when executed by at least one processor, and the action comprises: a first receiver, receiving the first message, wherein the first message comprises the first configuration information; and making the measurement in the plurality of cells on the basis of the first configuration information; and a first transmitter, sending the second message, wherein the second message comprises the first measurement information, the first measurement information comprises measurement information of the plurality of cells, and the measurement information of any cell in the plurality of cells comprises the cell identity of the any cell, wherein the first measurement information depends on the measurement that is made in the plurality of cells on the basis of the first configuration information; and the plurality of cells are cells through which the first node passes.

As one embodiment, the first communication device 410 corresponds to a second node in the present application; the second communication device 410 comprises: at least one processor and at least one memory, wherein the at least one memory comprises computer program codes; and the at least one memory and the computer program codes are configured to be used together with the at least one processor. The second communication device 410 at least: receives the second message, wherein the second message comprises the first measurement information, the first measurement information comprises measurement information of the plurality of cells, and the measurement information of any cell in the plurality of cells comprises the cell identity of the any cell, wherein a sender of the second message receives the first message, and the first message comprises the first configuration information; the sender of the second message makes the measurement in the plurality of cells on the basis of the first configuration information; the first measurement information depends on the measurement that is made by the sender of the second message in the plurality of cells on the basis of the first configuration information; and the plurality of cells are cells through which the sender of the second message passes.

As one embodiment, the first communication device 410 corresponds to the second node in the present application; and the second communication device 410 comprises: a memory storing a computer-readable instruction program, wherein the computer-readable instruction program generates an action when executed by at least one processor, and the action comprises: a second receiver, receiving the second message, wherein the second message comprises the first measurement information, the first measurement information comprises measurement information of the plurality of cells, and the measurement information of any cell in the plurality of cells comprises the cell identity of the any cell, wherein the sender of the second message receives the first message, and the first message comprises the first configuration information; the sender of the second message makes the measurement in the plurality of cells on the basis of the first configuration information; the first measurement information depends on the measurement that is made by the sender of the second message in the plurality of cells on the basis of the first configuration information; and the plurality of cells are cells through which the sender of the second message passes.

As one embodiment, the first communication device 410 corresponds to a third node in the present application; the second communication device 410 comprises: at least one processor and at least one memory, wherein the at least one memory comprises computer program codes; and the at least one memory and the computer program codes are configured to be used together with the at least one processor. The second communication device 410 at least: sends the first message, wherein the first message comprises the first configuration information.

As one embodiment, the first communication device 410 corresponds to the third node in the present application; and the second communication device 410 comprises: a memory storing a computer-readable instruction program, wherein the computer-readable instruction program generates an action when executed by at least one processor, and the action comprises: sending the first message, wherein the first message comprises the first configuration information.

As one embodiment, at least one of the antenna 452, the receiving device 454, the receiving processor 456, and the controller/processor 459 is used for receiving the first message.

As one embodiment, at least one of the antenna 420, the transmitting device 418, the transmitting processor 416, and the controller/processor 475 is used for sending the first message.

As one embodiment, at least one of the antenna 452, the receiving device 454, the receiving processor 456, and the controller/processor 459 is used for sending the second message.

As one embodiment, at least one of the antenna 420, the transmitting device 418, the transmitting processor 416, and the controller/processor 475 is used for receiving the second message.

As one embodiment, at least one of the antenna 452, the receiving device 454, the receiving processor 456, and the controller/processor 459 is used for receiving a third message.

As one embodiment, at least one of the antenna 420, the transmitting device 418, the transmitting processor 416, and the controller/processor 475 is used for sending the third message.

As one embodiment, the first communication device 450 corresponds to the first node in the present application.

As one embodiment, the first communication device 450 is one piece of user equipment.

As one embodiment, the first communication device 450 is one base station device.

As one embodiment, the first communication device 450 is one relay device.

As one embodiment, the second communication device 410 is one piece of user equipment.

As one embodiment, the second communication device 410 is one base station device.

As one embodiment, the second communication device 410 is one relay device.

### Embodiment 5

Embodiment 5 illustrates a flowchart of wireless signal transmission according to one embodiment of the present application, as shown in FIG. 5. It is particularly noted that an order in this example does not limit a signal transmission order and an implementation order in the present application.

For **a first node U01,** in step S5101, a first message is received, and the first message comprises first configuration information; in step S5102, a measurement is made in a plurality of cells on the basis of the first configuration information; in step S5103, a third message is received, and the third message comprises a first indication; and in step S5104, a second message is sent, and the second message comprises first measurement information.

For **a second node N02,** in step S5201, the third message is sent; and in step S5202, the second message is received.

For **a third node N03,** in step S5301, the first message is sent.

In Embodiment 5, the first measurement information comprises measurement information of the plurality of cells, and the measurement information of any cell in the plurality of cells comprises a cell identity of the any cell; the first measurement information depends on the measurement that is made in the plurality of cells on the basis of the first configuration information; and the plurality of cells are cells through which the first node passes.

As one embodiment, the first node U01 and the second node N02 are connected in a wireless mode.

As one embodiment, the first node U01 and the second node N02 are connected in a wired mode.

As one embodiment, the first node U01 and the second node N02 are connected through a Uu interface.

As one embodiment, the first node U01 and the second node N02 are connected through an IAB interface.

As one embodiment, the first node U01 and the second node N02 are connected through a PC5 interface.

As one embodiment, the third node N03 and the second node N02 are connected through a wireless interface.

As one embodiment, the third node N03 and the second node N02 are connected through a wired interface.

As one embodiment, the third node N03 and the second node N02 are connected through an Xn interface.

As one embodiment, the third node N03 and the second node N02 are connected through an X2 interface.

As one embodiment, backhaul between the third node N03 and the second node N02 is ideal.

As one embodiment, backhaul between the third node N03 and the second node N02 is non-ideal.

As one embodiment, the third node N03 is the second node N02.

As one embodiment, the third node N03 is not the second node N02.

As one embodiment, the third node N03 is one node other than the second node N02.

As one embodiment, after receiving the second message, the second node N02 forwards the second message to the third node N03.

As one embodiment, after receiving the second message, the second node N02 forwards the second message to any node other than the third node N03 and the second node N02.

As one embodiment, the first node U01 receives the first message.

As one sub-embodiment of the above embodiment, the first message comprises the first configuration information.

As one sub-embodiment of the above embodiment, the first message comprises an index associated with the first configuration information.

As one embodiment, the first node U01 makes the measurement in the plurality of cells on the basis of the first configuration information.

As one sub-embodiment of the above embodiment, the first configuration information comprises a measurement-related configuration.

As one sub-embodiment of the above embodiment, the first configuration information comprises a reporting-related configuration.

As one sub-embodiment of the above embodiment, the first configuration information comprises at least one of the measurement-related configuration and the reporting-related configuration.

As one sub-embodiment of the above embodiment, the first configuration information comprises configuration information of the plurality of cells.

As one sub-embodiment of the above embodiment, the first configuration information comprises cell identities of the plurality of cells.

As one sub-embodiment of the above embodiment, the first configuration information comprises configuration information of at least one cell.

As one sub-embodiment of the above embodiment, the first configuration information comprises a cell identity of at least one cell.

As one embodiment, a dotted block F5.1 is optional.

As one embodiment, the dotted block F5.1 exists.

As one embodiment, the first node U01 receives the third message.

As one sub-embodiment of the above embodiment, the third message comprises the first indication.

As one sub-embodiment of the above embodiment, the third message triggers the second message, and the second message comprising the first measurement information depends on the third message comprising the first indication; and the first measurement information is stored in a first UE variable.

As one dependent embodiment of this sub-embodiment, the third message is one RRC sublayer message.

As one dependent embodiment of this sub-embodiment, the third message is one piece of MAC sublayer signaling.

As one dependent embodiment of this sub-embodiment, the third message is one MAC CE.

As one dependent embodiment of this sub-embodiment, the third message is one piece of signaling of a layer lower than a MAC sublayer.

As one dependent embodiment of this sub-embodiment, the third message is one piece of DCI signaling.

As one dependent embodiment of this sub-embodiment, the third message is a Request message.

As one dependent embodiment of this sub-embodiment, the third message is a reporting request message.

As one dependent embodiment of this sub-embodiment, the third message is an AIInformationRequest message.

As one dependent embodiment of this sub-embodiment, the third message is a UEInformationRequest message.

As one dependent embodiment of this sub-embodiment, the second message is a Response message.

As one dependent embodiment of this sub-embodiment, the second message is a reporting message.

As one dependent embodiment of this sub-embodiment, the second message is an AIInformationResponse message.

As one dependent embodiment of this sub-embodiment, the second message is a UEInformationResponse message.

As one dependent embodiment of this sub-embodiment, the third message is a UEInformationRequest message, and the second message is a UEInformationResponse message.

As one dependent embodiment of this sub-embodiment, the first indication is used for requesting information stored in the first UE variable.

As one dependent embodiment of this sub-embodiment, the first indication is used for requesting the first measurement information.

As one dependent embodiment of this sub-embodiment, the first indication is used for requesting all or part of the first measurement information.

As one dependent embodiment of this sub-embodiment, the first indication belongs to UEInformationRequest-r16-IEs.

As one dependent embodiment of this sub-embodiment, a name of the first indication contains ReportReq.

As one dependent embodiment of this sub-embodiment, the name of the first indication contains AI-ReportReq.

As one dependent embodiment of this sub-embodiment, the name of the first indication contains MeasReportReq.

As one dependent embodiment of this sub-embodiment, the first indication is AI-ReportReq-r19.

As one dependent embodiment of this sub-embodiment, the first indication is rlf-ReportReq-r16.

As one dependent embodiment of this sub-embodiment, the first indication is successHO-ReportReq-r17.

As one dependent embodiment of this sub-embodiment, the first UE variable comprises VarAI-Report.

As one dependent embodiment of this sub-embodiment, the first UE variable comprises VarRLF-Report.

As one dependent embodiment of this sub-embodiment, the first UE variable comprises VarSuccessHO-Report.

As one dependent embodiment of this sub-embodiment, the first UE variable is one VarAI-Report.

As one dependent embodiment of this sub-embodiment, the first UE variable is one VarRLF-Report.

As one dependent embodiment of this sub-embodiment, the first UE variable is one VarSuccessHO-Report.

As one dependent embodiment of this sub-embodiment, the first UE variable is one VarMobilityHistoryReport.

As one dependent embodiment of this sub-embodiment, the first measurement information is stored in one VisitedCellInfoList.

As one dependent embodiment of this sub-embodiment, the first measurement information is stored in one VisitedPSCellInfoList.

As one dependent embodiment of this sub-embodiment, the first measurement information is stored in one AlmobilityReport.

As one dependent embodiment of this sub-embodiment, the first measurement information is stored in one AI-Report.

As one dependent embodiment of this sub-embodiment, the first measurement information is stored in one RLF-Report.

As one dependent embodiment of this sub-embodiment, the first measurement information is stored in one SuccessHO-Report.

As one dependent embodiment of this sub-embodiment, the first measurement information is stored in one AI-Report, and the AI-Report is contained in an RLF-Report field.

As one dependent embodiment of this sub-embodiment, the first measurement information is stored in one AI-Report, and the AI-Report is contained in a SuccessHO-Report field.

As one dependent embodiment of this sub-embodiment, with passing through one cell in the plurality of cells, measurement information of the one cell is stored in the first UE variable.

As one dependent embodiment of this sub-embodiment, the "with passing through one cell in the plurality of cells" means: when passing through the one cell in the plurality of cells.

As one dependent embodiment of this sub-embodiment, the "with passing through one cell in the plurality of cells" means: when being in the one cell in the plurality of cells.

As one dependent embodiment of this sub-embodiment, the "with passing through one cell in the plurality of cells" means: when leaving the one cell in the plurality of cells.

As one dependent embodiment of this sub-embodiment, with residing in one cell in the plurality of cells, measurement information of the one cell is stored in the first UE variable.

As one dependent embodiment of this sub-embodiment, the "with residing on one cell in the plurality of cells" means: when connecting to the one cell in the plurality of cells.

As one dependent embodiment of this sub-embodiment, the "with residing on one cell in the plurality of cells" means: when performing reconnection in the one cell in the plurality of cells.

As one dependent embodiment of this sub-embodiment, the "with residing on one cell in the plurality of cells" means: when performing initial access in the one cell in the plurality of cells.

As one dependent embodiment of this sub-embodiment, the "with residing on one cell in the plurality of cells" means: when a radio link failure (RLF) occurs in the one cell in the plurality of cells.

As one dependent embodiment of this sub-embodiment, the "with residing on one cell in the plurality of cells" means: when a handover failure (HOF) occurs in the one cell in the plurality of cells.

As one embodiment, the dotted block F5.1 does not exist.

As one embodiment, the first node U01 sends the second message.

As one sub-embodiment of the above embodiment, after receiving the first message, the first node triggers a first timer, the first timer expires, and the second message is sent.

As one dependent embodiment of this sub-embodiment, the first timer is T321.

As one dependent embodiment of this sub-embodiment, the first timer is T322.

As one dependent embodiment of this sub-embodiment, the first timer is one timer other than the T321 or the T322.

As one sub-embodiment of the above embodiment, after receiving the first message, the first node sends the second message after triggering a first event.

As one dependent embodiment of this sub-embodiment, after receiving the first message, the first node executes the first configuration information, stores the first measurement information, and sends the second message after triggering the first event, and the second message comprises the first measurement information.

As one dependent embodiment of this sub-embodiment, the first measurement information is one measurement result set.

As one dependent embodiment of this sub-embodiment, the first measurement information comprises a plurality of pieces of RRC layer signaling.

As one dependent embodiment of this sub-embodiment, the first measurement information is one set comprising a plurality of pieces of RRC layer signaling.

As one dependent embodiment of this sub-embodiment, the first measurement information comprises a plurality of pieces of signaling of a layer lower than an RRC sublayer.

As one dependent embodiment of this sub-embodiment, the first measurement information is one set comprising a plurality of pieces of signaling of a layer lower than the RRC sublayer.

As one dependent embodiment of this sub-embodiment, the first event is an A3 event.

As one dependent embodiment of this sub-embodiment, the first event is one event other than the A3 event.

### Embodiment 6

Embodiment 6 illustrates a schematic diagram in which sending a second message or making a measurement in a plurality of cells on the basis of first configuration information depends on a first threshold according to one embodiment of the present application.

In Embodiment 6, at least one of the behavior of sending the second message or the behavior of making the measurement in the plurality of cells on the basis of the first configuration information depends on a movement speed of a first node exceeding the first threshold; and a first message comprises the first threshold.

As one embodiment, the behavior of sending the second message depends on the movement speed of the first node exceeding the first threshold.

As one sub-embodiment of the above embodiment, the movement speed of the first node exceeding the first threshold triggers the behavior of sending the second message.

As one sub-embodiment of the above embodiment, when the movement speed of the first node exceeds the first threshold, the second message is sent.

As one sub-embodiment of the above embodiment, in response to the movement speed of the first node exceeding the first threshold, the second message is sent.

As one sub-embodiment of the above embodiment, within at least one time interval before the movement speed of the first node exceeds the first threshold, the first node has not sent the second message.

As one embodiment, the behavior of making the measurement in the plurality of cells on the basis of the first configuration information depends on the movement speed of the first node exceeding the first threshold.

As one sub-embodiment of the above embodiment, the movement speed of the first node exceeding the first threshold triggers the behavior of making the measurement in the plurality of cells on the basis of the first configuration information.

As one sub-embodiment of the above embodiment, when the movement speed of the first node exceeds the first threshold, the measurement is made in the plurality of cells on the basis of the first configuration information.

As one sub-embodiment of the above embodiment, in response to the movement speed of the first node exceeding the first threshold, the measurement is made in the plurality of cells on the basis of the first configuration information.

As one sub-embodiment of the above embodiment, within at least one time interval before the movement speed of the first node exceeds the first threshold, the behavior of making the measurement in the plurality of cells on the basis of the first configuration information is not performed.

As one embodiment, both the behavior of sending the second message and the behavior of making the measurement in the plurality of cells on the basis of the first configuration information depend on the movement speed of the first node exceeding the first threshold.

As one sub-embodiment of the above embodiment, the movement speed of the first node exceeding the first threshold triggers the behavior of making the measurement in the plurality of cells on the basis of the first configuration information and sending the second message.

As one sub-embodiment of the above embodiment, when the movement speed of the first node exceeds the first threshold, the measurement is made in the plurality of cells on the basis of the first configuration information, and the second message is sent.

As one sub-embodiment of the above embodiment, in response to the movement speed of the first node exceeding the first threshold, the measurement is made in the plurality of cells on the basis of the first configuration information, and the second message is sent.

As one embodiment, the movement speed of the first node is obtained through measurement.

As one embodiment, the movement speed of the first node is obtained through prediction.

As one embodiment, the movement speed of the first node is obtained through inference.

As one embodiment, a processing module for the movement speed of the first node exists in the first node.

As one embodiment, the first node is located in a first cell, and the first cell monitors the movement speed of the first node.

As one sub-embodiment of the above embodiment, the phrase "the first node is located in a first cell" means that: the first node resides on the first cell.

As one sub-embodiment of the above embodiment, the phrase "the first node is located in a first cell" means that: the first node enters the first cell.

As one sub-embodiment of the above embodiment, the phrase "the first node is located in a first cell" means that: the first node leaves the first cell.

As one embodiment, the first node is located in the first cell, the first cell obtains the movement speed of the first node, the movement speed of the first node exceeds the first threshold, and the first cell notifies the first node to perform the behavior through relevant signaling.

As one embodiment, the first node is located in the first cell, and the first cell obtains the movement speed of the first node and notifies the first node through relevant signaling.

As one embodiment, the first node is located in the first cell, the first cell obtains the movement speed of the first node and notifies the first node through relevant signaling, and the first cell is any cell in the plurality of cells.

As one embodiment, the first node is located in the first cell, the first cell obtains the movement speed of the first node and notifies the first node through relevant signaling, and the first cell is not any cell in the plurality of cells.

As one embodiment, the first message comprises a second information block, and the second information block indicates the first threshold.

As one embodiment, the first threshold is associated with the first configuration information.

As one embodiment, the first threshold is obtained through AI training.

As one embodiment, the first threshold is obtained through AI inference.

As one embodiment, the first threshold is obtained through AI computation.

As one embodiment, the first threshold is preconfigured.

As one embodiment, the first threshold changes over time.

As one embodiment, the first threshold changes with the environment.

As one embodiment, the first threshold changes with the movement speed of the first node.

As one embodiment, the first threshold is a speed threshold.

As one embodiment, a unit of the first threshold is km/h.

As one embodiment, the unit of the first threshold is m/s.

### Embodiment 7

Embodiment 7 illustrates a schematic diagram in which sending a second message or making a measurement in a plurality of cells on the basis of first configuration information depends on a second threshold according to one embodiment of the present application.

In Embodiment 7, at least one of the behavior of sending the second message or the behavior of making the measurement in the plurality of cells on the basis of the first configuration information depends on a number of passed-through cells within a first time interval exceeding the second threshold; and a first message comprises the second threshold and a time length of the first time interval.

As one embodiment, the behavior of sending the second message depends on the number of passed-through cells within the first time interval exceeding the second threshold.

As one sub-embodiment of the above embodiment, the number of passed-through cells within the first time interval exceeding the second threshold triggers the behavior of sending the second message.

As one sub-embodiment of the above embodiment, when the number of passed-through cells within the first time interval exceeds the second threshold, the second message is sent.

As one sub-embodiment of the above embodiment, in response to the number of passed-through cells within the first time interval exceeding the second threshold, the second message is sent.

As one sub-embodiment of the above embodiment, within at least one time interval before the number of passed-through cells within the first time interval does not exceed the second threshold, a first node has not sent the second message.

As one embodiment, the behavior of making the measurement in the plurality of cells on the basis of the first configuration information depends on the number of passed-through cells within the first time interval exceeding the second threshold.

As one sub-embodiment of the above embodiment, the number of passed-through cells within the first time interval exceeding the second threshold triggers the behavior of making the measurement in the plurality of cells on the basis of the first configuration information.

As one sub-embodiment of the above embodiment, when the number of passed-through cells within the first time interval exceeds the second threshold, the measurement is made in the plurality of cells on the basis of the first configuration information.

As one sub-embodiment of the above embodiment, in response to the number of passed-through cells within the first time interval exceeding the second threshold, the measurement is made in the plurality of cells on the basis of the first configuration information.

As one sub-embodiment of the above embodiment, within at least one time interval before the number of passed-through cells within the first time interval does not exceed the second threshold, the behavior of making the measurement in the plurality of cells on the basis of the first configuration information is not performed.

As one embodiment, both the behavior of sending the second message and the behavior of making the measurement in the plurality of cells on the basis of the first configuration information depend on the number of passed-through cells within the first time interval exceeding the second threshold.

As one sub-embodiment of the above embodiment, the number of passed-through cells within the first time interval exceeding the second threshold triggers the behavior of making the measurement in the plurality of cells on the basis of the first configuration information and sending the second message.

As one sub-embodiment of the above embodiment, when the number of passed-through cells within the first time interval exceeds the second threshold, the measurement is made in the plurality of cells on the basis of the first configuration information, and the second message is sent.

As one sub-embodiment of the above embodiment, in response to the number of passed-through cells within the first time interval exceeding the second threshold, the measurement is made in the plurality of cells on the basis of the first configuration information, and the second message is sent.

As one embodiment, the number of passed-through cells within the first time interval is obtained through statistics.

As one embodiment, the number of passed-through cells within the first time interval is obtained through prediction.

As one embodiment, the number of passed-through cells within the first time interval is obtained through inference.

As one embodiment, the first message comprises a third information block, and the third information block indicates the time length of the first time interval.

As one embodiment, the third information block indicates the second threshold.

As one sub-embodiment of the above embodiment, the third information block indicates a size of the second threshold.

As one sub-embodiment of the above embodiment, the third information block indicates a position of the second threshold.

As one embodiment, the third information block indicates the second threshold and the time length of the first time interval.

As one embodiment, the second threshold is associated with the time length of the first time interval.

As one embodiment, the second threshold is obtained through AI training.

As one embodiment, the second threshold is obtained through AI inference.

As one embodiment, the second threshold is obtained through AI computation.

As one embodiment, the second threshold is preconfigured.

As one embodiment, the second threshold changes over time.

As one embodiment, the second threshold changes with the environment.

As one embodiment, the second threshold is one positive integer.

As one embodiment, the second threshold is one non-negative integer.

As one embodiment, a maximum value of the second threshold does not exceed 8.

As one embodiment, the maximum value of the second threshold does not exceed 4.

As one embodiment, the second threshold is associated with the time length of the first time interval.

As one embodiment, the time length of the first time interval is obtained through AI training.

As one embodiment, the time length of the first time interval is obtained through AI inference.

As one embodiment, the time length of the first time interval is obtained through AI computation.

As one embodiment, the time length of the first time interval is preconfigured.

As one embodiment, the time length of the first time interval changes over time.

As one embodiment, the time length of the first time interval changes with the environment.

As one embodiment, a unit of the time length of the first time interval is second.

As one embodiment, the unit of the time length of the first time interval is minute.

As one embodiment, the unit of the time length of the first time interval is half minute.

As one embodiment, the unit of the time length of the first time interval is any one of second or minute.

### Embodiment 8

Embodiment 8 illustrates a schematic diagram in which sending a second message depends on a priority of measurement information according to one embodiment of the present application.

In Embodiment 8, the behavior of sending the second message depends on the priority of the measurement information of the plurality of cells.

As one embodiment, the priority of the measurement information is one non-negative integer.

As one sub-embodiment of the above embodiment, the priority of the measurement information is one positive integer.

As one sub-embodiment of the above embodiment, the priority of the measurement information is one non-negative integer.

As one sub-embodiment of the above embodiment, the greater a value of the priority of the measurement information, the higher the priority of the measurement information.

As one sub-embodiment of the above embodiment, the smaller the value of the priority of the measurement information, the higher the priority of the measurement information.

As one embodiment, the priority of the measurement information depends on whether the measurement information of at least one cell in the plurality of cells is reported.

As one sub-embodiment of the above embodiment, when the measurement information of the at least one cell in the plurality of cells is not reported, the second message is sent.

As one sub-embodiment of the above embodiment, the phrase "when the measurement information of the at least one cell in the plurality of cells is not reported, the second message is sent" means that: within at least a period of time before the second message is sent, the measurement information of the at least one cell is not reported.

As one sub-embodiment of the above embodiment, the phrase "when the measurement information of the at least one cell in the plurality of cells is not reported, the second message is sent" means that: before the second message is sent, the measurement information of the at least one cell has never been reported.

As one embodiment, the priority of the measurement information depends on a number of cells whose measurement information is not reported in the plurality of cells.

As one sub-embodiment of the above embodiment, when the number of cells whose measurement information is not reported in the plurality of cells is greater than N1, the second message is sent.

As one sub-embodiment of the above embodiment, when the number of cells whose measurement information is not reported in the plurality of cells is not less than the N1, the second message is sent.

As one sub-embodiment of the above embodiment, the number of cells whose measurement information is not reported in the plurality of cells is obtained through statistics.

As one sub-embodiment of the above embodiment, the number of cells whose measurement information is not reported in the plurality of cells is obtained through prediction.

As one sub-embodiment of the above embodiment, the number of cells whose measurement information is not reported in the plurality of cells is obtained through computation.

As one sub-embodiment of the above embodiment, a first node monitors the number of cells whose measurement information is not reported in the plurality of cells.

As one sub-embodiment of the above embodiment, the first node counts the number of cells whose measurement information is not reported in the plurality of cells.

As one sub-embodiment of the above embodiment, the first node predicts the number of cells whose measurement information is not reported in the plurality of cells.

As one sub-embodiment of the above embodiment, the first node is notified of the number of cells whose measurement information is not reported in the plurality of cells.

As one sub-embodiment of the above embodiment, a first message comprises the N1.

As one sub-embodiment of the above embodiment, the first message indicates the N1.

As one sub-embodiment of the above embodiment, the N1 is configured by the first node.

As one sub-embodiment of the above embodiment, the N1 is a positive integer.

As one sub-embodiment of the above embodiment, the N1 is a non-negative integer.

As one embodiment, the priority of the measurement information depends on a measurement result change value of the measurement information in the plurality of cells.

As one sub-embodiment of the above embodiment, the measurement result change value means: a change value of measurement results occurring within the same cell within a certain time interval.

As one sub-embodiment of the above embodiment, the measurement result change value means: the change value of measurement results occurring within the same cell within a certain time interval exceeding one threshold.

As one sub-embodiment of the above embodiment, the measurement result change value means: the change value of measurement results occurring in neighboring cells within a certain time interval.

As one sub-embodiment of the above embodiment, the measurement result change value means: the change value of measurement results occurring in neighboring cells within a certain time interval exceeding one threshold.

As one sub-embodiment of the above embodiment, a result change value of the measurement information in the plurality of cells triggers the sending of the second message.

As one sub-embodiment of the above embodiment, the measurement result change value of the measurement information in the plurality of cells exceeding one threshold triggers the sending of the second message.

As one sub-embodiment of the above embodiment, in response to the measurement result change value of the measurement information in the plurality of cells exceeding one threshold, the second message is sent.

As one embodiment, the behavior of sending the second message depending on the priority of the measurement information means that: measurement information with a high priority of the measurement information triggers the sending of the second message.

As one embodiment, the behavior of sending the second message depending on the priority of the measurement information means that: the first node makes the measurement in the plurality of cells and stores the measurement information, the measurement information with the high priority triggers the sending of the second message, and the second message only comprises the measurement information with the high priority.

As one embodiment, the behavior of sending the second message depending on the priority of the measurement information means that: the first node makes the measurement in the plurality of cells and stores the measurement information, the measurement information with the high priority triggers the sending of the second message, and the second message comprises all stored measurement information before the measurement information with the high priority is measured.

### Embodiment 9

Embodiment 9 illustrates a schematic diagram in which first measurement information indicates an order of a plurality of cells according to one embodiment of the present application.

In Embodiment 9, the first measurement information indicates an order in which a first node passes through the plurality of cells.

As one embodiment, the first measurement information comprises a first list, the first list comprises the measurement information of the plurality of cells, and an order of the measurement information of the plurality of cells in the first list indicates an order in which the first node passes through the plurality of cells.

As one sub-embodiment of the above embodiment, the first node passes through the plurality of cells, makes a measurement on the plurality of cells, and stores the measurement information in the first list when the measurement information is greater than one threshold.

As one sub-embodiment of the above embodiment, the first node passes through the plurality of cells, makes the measurement on the plurality of cells, and stores the measurement information in the first list when the measurement information is greater than one threshold within a certain time interval.

As one sub-embodiment of the above embodiment, the phrase "making a measurement on the plurality of cells" means making the measurement on any cell in the plurality of cells.

As one sub-embodiment of the above embodiment, the phrase "making a measurement on the plurality of cells" means making the measurement on a plurality of beams in the plurality of cells.

As one sub-embodiment of the above embodiment, the phrase "making a measurement on the plurality of cells" means making the measurement on any cell in the plurality of cells and its neighboring cells.

As one sub-embodiment of the above embodiment, the phrase "making a measurement on the plurality of cells" means making the measurement on any cell in the plurality of cells and its neighboring cells when the measurement is triggered.

As one embodiment, the first measurement information comprises a first field, the first field comprises measurement indexes of the plurality of cells, the measurement indexes indicate the measurement information of the plurality of cells, and an order of the cell identity indexes indicates the order in which the first node passes through the plurality of cells.

As one sub-embodiment of the above embodiment, the measurement index comprises measId.

As one sub-embodiment of the above embodiment, the measurement index is measId.

As one sub-embodiment of the above embodiment, the measurement index belongs to measId.

As one sub-embodiment of the above embodiment, the measurement index is determined by cell identifiers of the plurality of cells.

As one embodiment, the first measurement information comprises a time at which the first node passes through the plurality of cells; and the time at which the first node passes through the plurality of cells indicates the order in which the first node passes through the plurality of cells.

As one sub-embodiment of the above embodiment, the time at which the first node passes through the plurality of cells means a time at which the first node enters the plurality of cells.

As one sub-embodiment of the above embodiment, the time at which the first node passes through the plurality of cells means a time at which the first node leaves the plurality of cells.

As one sub-embodiment of the above embodiment, the time at which the first node passes through the plurality of cells means a time at which the first node establishes connections with the plurality of cells.

As one embodiment, the first measurement information comprises cell identifiers of the plurality of cells through which the first node passes; and an order of the cell identifiers of the plurality of cells through which the first node passes indicates the order in which the first node passes through the plurality of cells.

As one embodiment, the first measurement information comprises beam identifiers of the plurality of cells through which the first node passes.

### Embodiment 10

Embodiment 10 illustrates a schematic diagram in which first measurement information indicates a coverage hole according to one embodiment of the present application.

In Embodiment 10, the first measurement information indicates that a first node does not pass through any cell between a first cell and a second cell; and the first cell and the second cell are one cell in the plurality of cells respectively.

As one embodiment, the first measurement information comprises a second time interval.

As one sub-embodiment of the above embodiment, the first measurement information comprises an index associated with the second time interval.

As one sub-embodiment of the above embodiment, the second time interval is a time interval during which the first node re-accesses the second cell after an RLF or an HOF occurs in the first cell.

As one sub-embodiment of the above embodiment, the second time interval is a time interval during which the first node successfully accesses the second cell after the RLF or the HOF occurs in the first cell.

As one sub-embodiment of the above embodiment, the second time interval is a time interval during which the first node does not reside on any cell; and the first node resides on the first cell before the second time interval, and the first node resides on the second cell after the second time interval.

As one dependent embodiment of the above sub-embodiment, the first cell and the second cell are neighboring cells.

As one dependent embodiment of the above sub-embodiment, the first cell and the second cell are not neighboring cells.

As one sub-embodiment of the above embodiment, whether the first measurement information comprises the second time interval is optional.

As one sub-embodiment of the above embodiment, the reporting of the second time interval is event-triggered.

As one sub-embodiment of the above embodiment, the reporting of the second time interval is periodic.

As one sub-embodiment of the above embodiment, the reporting of the second time interval is signaling-triggered.

As one embodiment, the first measurement information comprises a second field.

As one sub-embodiment of the above embodiment, the second field indicates that the first node does not pass through any cell between the first cell and the second cell.

As one sub-embodiment of the above embodiment, the second field comprises a cell identifier of the first cell.

As one sub-embodiment of the above embodiment, the second field comprises a cell identifier of the second cell.

As one sub-embodiment of the above embodiment, the second field comprises at least one of the cell identifier of the first cell and the cell identifier of the second cell.

As one sub-embodiment of the above embodiment, the second field comprises the second time interval.

As one sub-embodiment of the above embodiment, the second field comprises position information of the first cell and the second cell.

As one sub-embodiment of the above embodiment, the second field comprises position information of at least one of the first cell and the second cell.

### Embodiment 11

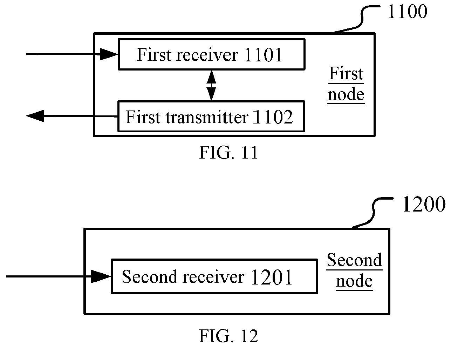

Embodiment 11 illustrates a structural block diagram of a processing apparatus used in a first node according to one embodiment of the present application, as shown in FIG. 11. In FIG. 11, a processing apparatus 1100 in the first node comprises a first receiver 1101 and a first transmitter 1102.

The first receiver 1101 receives a first message, wherein the first message comprises first configuration information; and makes a measurement in a plurality of cells on the basis of the first configuration information; and
the first transmitter 1102 sends a second message, wherein the second message comprises first measurement information, the first measurement information comprises measurement information of the plurality of cells, and the measurement information of any cell in the plurality of cells comprises a cell identity of the any cell.

In Embodiment 11, the first measurement information depends on the measurement that is made in the plurality of cells on the basis of the first configuration information; and the plurality of cells are cells through which the first node passes.

As one embodiment, at least one of the behavior of sending the second message or the behavior of making the measurement in the plurality of cells on the basis of the first configuration information depends on a movement speed of the first node exceeding a first threshold; and the first message comprises the first threshold.

As one embodiment, at least one of the behavior of sending the second message or the behavior of making the measurement in the plurality of cells on the basis of the first configuration information depends on a number of passed-through cells within a first time interval exceeding a second threshold; and the first message comprises the second threshold and a time length of the first time interval.

As one embodiment, the behavior of sending the second message depends on a priority of the measurement information of the plurality of cells.

As one embodiment, the first measurement information indicates an order in which the first node passes through the plurality of cells.

As one embodiment, the first measurement information indicates that the first node does not pass through any cell between a first cell and a second cell; and the first cell and the second cell are one cell in the plurality of cells respectively.

As one embodiment, the first receiver 1101 receives a third message, and the third message comprises a first indication, wherein the third message triggers the second message; the second message comprising the first measurement information depends on the third message comprising the first indication; and the first measurement information is stored in a first UE variable.

As one embodiment, the first receiver 1101 comprises at least one of an antenna 452 or a receiving device 454 or a multi-antenna receiving processor 458 or a receiving processor 456 or a controller/processor 459 or a memory 460 or a data source 467 in FIG. 4 of the present application.

As one embodiment, the first receiver 1101 comprises at least the antenna 452 and the receiving device 454 in FIG. 4 of the present application.

As one embodiment, the first transmitter 1102 comprises at least one of the antenna 452 or a transmitting device 454 or a multi-antenna transmitting processor 457 or a transmitting processor 468 or the controller/processor 459 or the memory 460 or the data source 467 in FIG. 4 of the present application.

As one embodiment, the first transmitter 1102 comprises at least the antenna 452 and the transmitting device 454 in FIG. 4 of the present application.

As one embodiment, the first UE variable in the second message is set by the first receiver 1101.

As one embodiment, the first UE variable in the second message is set by the first transmitter 1102.

As one embodiment, the first UE variable in the second message is set by the memory 460 in the first receiver 1101.

As one embodiment, the first UE variable in the second message is set by the memory 460 in the first transmitter 1102.

As one embodiment, the first UE variable in the second message is set by the controller/processor 459 in the first receiver 1101.

As one embodiment, the first UE variable in the second message is set by the controller/processor 459 in the first transmitter 1102.

### Embodiment 12

Embodiment 12 illustrates a structural block diagram of a processing apparatus used in a second node according to one embodiment of the present application, as shown in FIG. 12. In

FIG. 12, a processing apparatus 1200 in the second node comprises a second receiver 1201.

The second receiver 1201 receives a second message, wherein the second message comprises first measurement information, the first measurement information comprises measurement information of a plurality of cells, and the measurement information of any cell in the plurality of cells comprises a cell identity of the any cell.

In Embodiment 12, a sender of the second message receives a first message, wherein the first message comprises first configuration information; the sender of the second message makes a measurement in the plurality of cells on the basis of the first configuration information; the first measurement information depends on the measurement that is made by the sender of the second message in the plurality of cells on the basis of the first configuration information; and the plurality of cells are cells through which the sender of the second message passes.

As one embodiment, at least one of the behavior of sending the second message or the behavior of making the measurement in the plurality of cells on the basis of the first configuration information depends on a movement speed of a first node exceeding a first threshold; and the first message comprises the first threshold.

As one embodiment, at least one of the behavior of sending the second message or the behavior of making the measurement in the plurality of cells on the basis of the first configuration information depends on a number of passed-through cells within a first time interval exceeding a second threshold; and the first message comprises the second threshold and a time length of the first time interval.

As one embodiment, the behavior of sending the second message depends on a priority of the measurement information of the plurality of cells.

As one embodiment, the first measurement information indicates an order in which the first node passes through the plurality of cells.

As one embodiment, the first measurement information indicates that the first node does not pass through any cell between a first cell and a second cell; and the first cell and the second cell are one cell in the plurality of cells respectively.

As one embodiment, the second receiver 1201 comprises at least one of an antenna 420 or a receiving device 418 or a multi-antenna receiving processor 472 or a receiving processor 470 or a controller/processor 475 or a memory 476 in FIG. 4 of the present application.

As one embodiment, the second receiver 1201 comprises at least the antenna 420 and the receiving device 418 in FIG. 4 of the present application.

### Embodiment 13

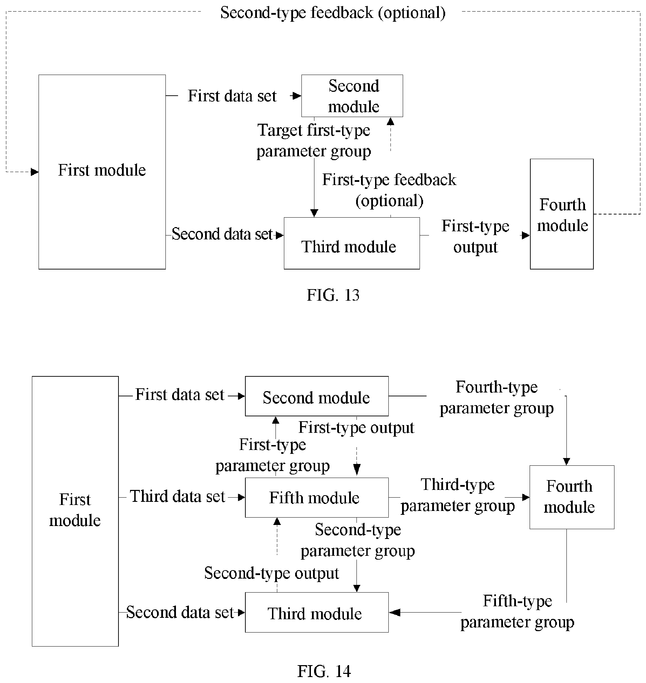

Embodiment 13 illustrates a schematic diagram of an artificial intelligence processing system according to one embodiment of the present application, as shown in FIG. 13. FIG. 13 comprises a first module, a second module, a third module, and a fourth module.

In Embodiment 13, the first module sends a first data set to the second module, the second module generates a target first-type parameter group according to the first data set, the second module sends the generated target first-type parameter group to the third module, and the third module processes a second data set using the target first-type parameter group to obtain a first-type output and then sends the first-type output to the fourth module.

As one embodiment, the first module, the second module, the third module, and the fourth module all belong to a first node.

The above method avoids air interface signaling interaction and shortens a transmission delay.

As one embodiment, the first module, the second module, the third module, and the fourth module belong to the first node and a second node.

As one embodiment, the first module belongs to the first node, and the second module, the third module, and the fourth module all belong to the second node.

The above method balances the hardware complexity and the transmission delay of the first node.

As one embodiment, the first module, the second module, the third module, and the fourth module belong to OAM to which the first node and the second node belong.

As one embodiment, the first module belongs to the first node, and the second module, the third module, and the fourth module all belong to OAM to which the second node belongs.

As one embodiment, the first module, the second module, the third module, and the fourth module all belong to the second node.

As one embodiment, the first module, the second module, the third module, and the fourth module all belong to OAM to which the second node belongs.

The above method balances hardware complexity of the first node and accuracy of the first-type output.

As one embodiment, the first module is used for data collection.

As one embodiment, the first module generates at least one of the first data set or the second data set according to the previous measurement.

As one embodiment, the first module sends the measurement result of the previous measurement; and the first module belongs to the first node.

As one embodiment, at least one of the first data set or the second data set is transmitted through a Uu interface.

As one embodiment, at least one of the first data set or the second data set is transmitted through an inter-module interface.

As one embodiment, at least one of the first data set or the second data set comprises a movement direction of the first node.

As one embodiment, at least one of the first data set or the second data set comprises a movement speed of the first node.

As one embodiment, at least one of the first data set or the second data set comprises a movement path of the first node.

As one embodiment, at least one of the first data set or the second data set comprises the measurement result of the previous measurement.

As one embodiment, at least one of the first data set or the second data set comprises first measurement information.

As one embodiment, the second module is used for model training.

As one embodiment, the first data set is training data, the second data set is inference data, the second module is used for training a model, and a trained model is described by the target first-type parameter group.

As one embodiment, the third module is used for model inference.

As one embodiment, the third module constructs a model according to the target first-type parameter group, then inputs the second data set into the constructed model to obtain the first-type output, and then sends the first-type output to the fourth module.

As one embodiment, the third module calculates an error between the first-type output and actual data to determine performance of the trained model; and the actual data is data that is received after the second data set and that is transferred from the first module.

The above embodiments are particularly suitable for prediction-related cell handover.

The above embodiments are particularly suitable for prediction-related mobility management.

As one embodiment, the third module sends first-type feedback to the second module, and the first-type feedback is used for triggering recalculation or update of the target first-type parameter group.

As one embodiment, the third module recovers a reference data set according to the first-type output, and an error between the reference data set and the second data set is used for generating the first-type feedback.

As one embodiment, the first-type feedback is used for reflecting performance of the trained model; and when the performance of the trained model cannot meet requirements, the second module recalculates the target first-type parameter group.

Typically, when the error is too large or has not been updated for too long, the performance of the trained model is considered to be unable to meet the requirements.

As one embodiment, the fourth module is one Actor.

As one embodiment, the fourth module receives the first-type output from the third module.

As one embodiment, the fourth module executes corresponding actions according to the first-type output.

As one embodiment, the fourth module sends second-type feedback to the first module, the second-type feedback is used for generating the first data set or the second data set, or the second-type feedback is used for triggering sending of the first data set or the second data set.

As one embodiment, the fourth module sends the second-type feedback to the first module, and the second-type feedback is used for triggering execution of the first-type output; and the second-type feedback comprises a first message.

As one embodiment, the behavior of executing the first-type output comprises the behavior "making a measurement in a plurality of cells on the basis of first configuration information".

As one embodiment, the first-type output comprises the first message.

As one embodiment, the first-type output comprises the first configuration information.

As one embodiment, the first-type output comprises a second message.

As one embodiment, the first-type output comprises first measurement information.

As one embodiment, the first-type output comprises a first threshold.

As one embodiment, the first-type output comprises a first time interval.

As one embodiment, the first-type output comprises a second threshold.

As one embodiment, the first-type output comprises the second threshold and the first time interval.

As one embodiment, the first-type output comprises a third message.

As one embodiment, the first-type output comprises a first indication.

As one embodiment, the first-type output comprises a first UE variable.

As one embodiment, the phrase "a first parameter set depends on a previous measurement" means that: an input of the artificial intelligence processing system depends on the previous measurement, and the first parameter set is an output of the artificial intelligence processing system.

As one embodiment, Embodiment 13 is only for illustrating that the present application can be used for the artificial intelligence processing system. This embodiment does not limit the application of the present application to a non-artificial intelligence processing system, and this embodiment does not limit the application of the present application to other types of artificial intelligence processing systems to achieve effects equivalent to the artificial intelligence processing system shown in FIG. 13.

### Embodiment 14

Embodiment 14 illustrates a schematic diagram of an artificial intelligence processing system according to another embodiment of the present application, as shown in FIG. 14. FIG. 14 comprises a first module, a second module, a third module, a fourth module, and a fifth module.

In Embodiment 14, the first module sends a first data set to the second module, the first module sends a second data set to the third module, the first module sends a third data set to the fifth module, the fifth module sends a first-type parameter group to the second module, the fifth module sends a second-type parameter group to the third module, the fifth module sends a third-type parameter group to the fourth module, the second module sends a fourth-type parameter group to the fourth module, and the fourth module sends a fifth-type parameter group to the third module.

As one embodiment, the first module, the second module, the third module, the fourth module, and the fifth module all belong to a first node.

The above method avoids air interface signaling interaction and shortens a transmission delay.

As one embodiment, any one of the first module, the second module, the third module, the fourth module, and the fifth module does not belong to the first node.

The above method reduces hardware complexity of the first node.

As one embodiment, at least the first module among the first module, the second module, the third module, the fourth module, and the fifth module belongs to the first node; and at least one of the first module, the second module, the third module, the fourth module, and the fifth module does not belong to the first node.

The above method balances the hardware complexity and the transmission delay of the first node.

As one embodiment, the first module is used for data collection.

As one embodiment, the first module is responsible for data collection.

As one embodiment, the first module has a data collection function.

As one embodiment, the second module is used for model training.

As one embodiment, the second module is responsible for model training.

As one embodiment, the second module has a model training function.

As one embodiment, the second module executes AI/ML model training.

As one embodiment, the second module executes validation.

As one embodiment, the second module executes testing.

As one embodiment, the second module generates model performance metrics.

As one embodiment, the second module is responsible for data preparation.

As one embodiment, the data preparation comprises at least one of data pre-processing or cleaning or formatting or transformation.

As one embodiment, the third module is used for inference.

As one embodiment, the third module has an inference function.

As one embodiment, the third module is responsible for inference.

As one embodiment, the fourth module is used for model storage.

As one embodiment, the fourth module has a model storage function.

As one embodiment, the fourth module is responsible for storing a trained model.

As one embodiment, the fourth module is responsible for storing a trained model that can be used for executing inference processing.

As one embodiment, the fifth module is used for management.

As one embodiment, the fifth module is responsible for management.

As one embodiment, the fifth module has a management function.

As one embodiment, the first data set is training data.

As one embodiment, the second data set is inference data.

As one embodiment, the third data set is monitoring data.

As one embodiment, the first-type parameter group comprises a monitoring output.

As one embodiment, the second-type parameter group comprises a management instruction.

As one embodiment, the second-type parameter group is used for a fine-tune operation of an inference function.

As one embodiment, the second-type parameter group comprises an identifier of a model.

As one embodiment, the second-type parameter group is used for selecting a model.

As one embodiment, the second-type parameter group is used for switching a model.

As one embodiment, the second-type parameter group is used for activating/deactivating a model.

As one embodiment, the second-type parameter group is used for falling back from an AI-ML operation to a non-AI-ML operation.

As one embodiment, the third-type parameter group comprises a model transfer request.

As one embodiment, the third-type parameter group comprises a model delivery request.

As one embodiment, the fourth-type parameter group comprises a trained model.

As one embodiment, the fourth-type parameter group comprises an updated model.

As one embodiment, the fourth-type parameter group indicates an identifier of a model.

As one embodiment, the fifth-type parameter group comprises model transfer.

As one embodiment, the fifth-type parameter group comprises model delivery.

As one embodiment, the fifth-type parameter group indicates an identifier of a model.

As one embodiment, a first-type output comprises a monitoring output.

As one embodiment, the first-type output exists.

As one embodiment, the first-type output does not exist.

As one embodiment, a second-type output comprises an inference output.

As one embodiment, the second-type output is used by the fifth module for monitoring performance of an AI/ML model.

As one embodiment, the second-type output is used by the fifth module for monitoring performance of an AI/ML function.

As one embodiment, the second-type output exists.

As one embodiment, the second-type output does not exist.

As one embodiment, the artificial intelligence processing system generates or assists in generating at least part of a first message.

As one embodiment, the fifth module generates or assists in generating at least part of the first message.

As one embodiment, the third module generates or assists in generating at least part of the first message.

As one embodiment, the second-type output comprises at least part of the first message.

As one embodiment, the artificial intelligence processing system generates or assists in generating first configuration information.

As one embodiment, the fifth module generates or assists in generating the first configuration information.

As one embodiment, the third module generates or assists in generating the first configuration information.

As one embodiment, the second-type output comprises the first configuration information.

As one embodiment, the artificial intelligence processing system generates or assists in generating a second message.

As one embodiment, the fifth module generates or assists in generating the second message.

As one embodiment, the third module generates or assists in generating the second message.

As one embodiment, the second-type output comprises the second message.

As one embodiment, the artificial intelligence processing system generates or assists in generating first measurement information.

As one embodiment, the fifth module generates or assists in generating the first measurement information.

As one embodiment, the third module generates or assists in generating the first measurement information.

As one embodiment, the second-type output comprises the first measurement information.

As one embodiment, the artificial intelligence processing system generates or assists in generating a first threshold.

As one embodiment, the fifth module generates or assists in generating the first threshold.

As one embodiment, the third module generates or assists in generating the first threshold.

As one embodiment, the second-type output comprises the first threshold.

As one embodiment, the artificial intelligence processing system generates or assists in generating at least one of a second threshold and a first time interval.

As one embodiment, the fifth module generates or assists in generating at least one of the second threshold and the first time interval.

As one embodiment, the third module generates or assists in generating at least one of the second threshold and the first time interval.

As one embodiment, the second-type output comprises at least one of the second threshold and the first time interval.

As one embodiment, the first data set comprises the first measurement information.

As one embodiment, the second data set comprises the first measurement information.

As one embodiment, the third data set comprises the first measurement information.

As one embodiment, the first data set comprises at least part of information in the first measurement information.

As one embodiment, the second data set comprises at least part of information in the first measurement information.

As one embodiment, the third data set comprises at least part of information in the first measurement information.

As one embodiment, Embodiment 14 is only for illustrating that the present application can be used for the artificial intelligence processing system. This embodiment does not limit the application of the present application to a non-artificial intelligence processing system, and this embodiment does not limit the application of the present application to other types of artificial intelligence processing systems to achieve effects equivalent to the artificial intelligence processing system shown in FIG. 14.

Those of ordinary skill in the art may understand that all or part of the steps in the above method can be completed by instructing relevant hardware through a program, and the program can be stored in a computer-readable storage medium, such as a read-only memory, a hard disk, or an optical disk. Optionally, all or part of the steps in the above embodiments may also be implemented using one or more integrated circuits. Accordingly, each module unit in the above embodiments may be implemented in the form of hardware or in the form of a software function module. The present application is not limited to any specific form of software and hardware combination. The user equipment, terminal and UE in the present application include but are not limited to drones, communication modules on drones, remote-controlled airplanes, aircrafts, small airplanes, mobile phones, tablets, notebooks, vehicle-mounted communication devices, wireless sensors, network cards, IoT terminals, RFID terminals, NB-IOT terminals, MTC (Machine Type Communication) terminals, eMTC (enhanced MTC) terminals, data cards, network cards, vehicle-mounted communication devices, low-cost mobile phones, low-cost tablets, and other wireless communication devices. The base station or system device in the present application includes but is not limited to macro cellular base stations, micro cellular base stations, Femtocells, relay base stations, gNBs (NR Nodes B), TRPs (Transmitter Receiver Points), and other wireless communication devices.

The above descriptions are only preferred embodiments of the present application and are not used for limiting the scope of protection of the present application. Any modifications, equivalent replacements, improvements, and the like made within the spirit and principles of the present application should be comprised in the scope of protection of the present application.

## Claims

1. A first node for wireless communication, comprising:
a first receiver, receiving a first message, wherein the first message comprises first configuration information; and making a measurement in a plurality of cells on the basis of the first configuration information; and
a first transmitter, sending a second message, wherein the second message comprises first measurement information, the first measurement information comprises measurement information of the plurality of cells, and the measurement information of any cell in the plurality of cells comprises a cell identity of the any cell,
wherein the first measurement information depends on the measurement that is made in the plurality of cells on the basis of the first configuration information; and the plurality of cells are cells through which the first node passes.

2. The first node according to claim 1, wherein at least one of the behavior of sending the second message or the behavior of making the measurement in the plurality of cells on the basis of the first configuration information depends on a movement speed of the first node exceeding a first threshold; and the first message comprises the first threshold.

3. The first node according to claim 1 or 2, wherein at least one of the behavior of sending the second message or the behavior of making the measurement in the plurality of cells on the basis of the first configuration information depends on a number of passed-through cells within a first time interval exceeding a second threshold; and the first message comprises the second threshold and a time length of the first time interval.

4. The first node according to any one of claims 1 to 3, wherein the behavior of sending the second message depends on a priority of the measurement information of the plurality of cells.

5. The first node according to any one of claims 1 to 4, wherein the first measurement information indicates an order in which the first node passes through the plurality of cells.

6. The first node according to any one of claims 1 to 5, wherein the first measurement information indicates that the first node does not pass through any cell between a first cell and a second cell; andthe first cell and the second cell are one cell in the plurality of cells respectively.

7. The first node according to any one of claims 1 to 6, comprising:
the first receiver, receiving a third message, wherein the third message comprises a first indication,
wherein the third message triggers the second message; the second message comprising the first measurement information depends on the third message comprising the first indication; and the first measurement information is stored in a first UE variable.

8. A second node for wireless communication, comprising:
a second receiver, receiving a second message, wherein the second message comprises first measurement information, the first measurement information comprises measurement information of a plurality of cells, and the measurement information of any cell in the plurality of cells comprises a cell identity of the any cell,
wherein a sender of the second message receives a first message, and the first message comprises first configuration information; the sender of the second message makes a measurement in the plurality of cells on the basis of the first configuration information; the first measurement information depends on the measurement that is made by the sender of the second message in the plurality of cells on the basis of the first configuration information; and the plurality of cells are cells through which the sender of the second message passes.

9. A method used in a first node for wireless communication, comprising:
receiving a first message, wherein the first message comprises first configuration information; making a measurement in a plurality of cells on the basis of the first configuration information; and
sending a second message, wherein the second message comprises first measurement information, the first measurement information comprises measurement information of the plurality of cells, and the measurement information of any cell in the plurality of cells comprises a cell identity of the any cell,
wherein the first measurement information depends on the measurement that is made in the plurality of cells on the basis of the first configuration information; and the plurality of cells are cells through which the first node passes.

10. A method used in a second node for wireless communication, comprising:
receiving a second message, wherein the second message comprises first measurement information, the first measurement information comprises measurement information of a plurality of cells, and the measurement information of any cell in the plurality of cells comprises a cell identity of the any cell,
wherein a sender of the second message receives a first message, and the first message comprises first configuration information; the sender of the second message makes a measurement in the plurality of cells on the basis of the first configuration information; the first measurement information depends on the measurement that is made by the sender of the second message in the plurality of cells on the basis of the first configuration information; and the plurality of cells are cells through which the sender of the second message passes.
